# EUROPEAN PATENT APPLICATION

(11) **EP 4 770 274 A1**
(43) Date of publication of application: **01.07.2026**
(21) Application number: 24868746.9
(22) Date of filing: 20.09.2024
(51) Int. Cl.: H05B 6/12, H05B 6/06, F24C 15/10, F24C 7/08, G01K 1/14, F24C 15/34, F24C 3/12

(54) **COOKING APPARATUS**

(30) Priority: 21.09.2023 KR 20230126657; 21.09.2023 KR 20230126658; 26.09.2023 KR 20230129155; 22.02.2024 KR 20240026117; 22.08.2024 KR 20240113044
(71) Applicant: LG Electronics Inc., Yeongdeungpo-gu Seoul 07336 (KR)
(72) Inventor: KIM, Eui Sung, Seoul 08592 (KR); MOON, Hyunwook, Seoul 08592 (KR); PARK, Kyungho, Seoul 08592 (KR)
(74) Representative: Vossius & Partner Patentanwälte Rechtsanwälte mbB
(86) International application number: PCT/KR2024/014243
(87) International publication number: WO 2025/063770

(57) **Abstract**

It relates to a cooking appliance in which it is possible to prevent deterioration in space utilization by forming a through hole, into which a temperature sensor can be at least partially inserted and coupled, on a coil circuit board module in which a working coil pattern is formed, while enabling the temperature sensor to be effectively installed without securing a separate installation space for the temperature sensor.

## Description

### [Technical Field]

The present invention relates to a cooking appliance, and more particularly, to a cooking appliance in which it is possible to prevent deterioration in space utilization by forming a through hole, into which a temperature sensor can be at least partially inserted and coupled, on a coil circuit board module in which a working coil pattern is formed, while enabling the temperature sensor to be effectively installed without securing a separate installation space for the temperature sensor.

### [Background Art]

A cooking appliance is a type of home appliance for cooking food and is installed in a kitchen space to cook the food based on an intention of a user. Such cooking appliance may be classified in various ways depending on a heat source used, a shape, and a type of fuel.

When classifying the cooking appliance based on a type of cooking the food, the cooking appliance may be classified into an open cooking appliance and a closed cooking appliance depending on a type of a space where the food is placed. Examples of the closed cooking appliance include an oven, a microwave, and the like, while examples of the open cooking appliance include a cooktop, a hob, and the like.

Among the open cooking appliances, the cooktop may be provided to be capable of heating food contained in a cooking container through at least one or more burners.

This cooktop may be provided in a form having a burner using electricity, or may be provided in a form having a burner using gas.

Additionally, the cooktop may be implemented as a standalone unit, or in the form of an oven range including an oven underneath the cooktop.

As an example of a cooktop having a burner using electricity, there is an induction heating cooking appliance.

The induction heating cooking appliance is a cooking appliance that performs a cooking function in an induction heating method. In the induction heating cooking appliance, when high-frequency power is applied to a working coil, a magnetic field can be formed around the working coil.

By the generated magnetic field, eddy current can be generated in the cooking container made of a magnetic material, and food can be cooked by the cooking container that generates heat by acting as a resistance to the eddy current.

This induction heating cooking appliance does not require combustion of gas and therefore does not produce combustion exhaust gases. Furthermore, by allowing the container itself to generate heat immediately, the induction heating cooking appliance can minimize the transfer process through heat radiation or conduction, thus being capable of heating the food at a high speed.

A conventional induction heating type cooktop is configured to form a individual burner by twisting a plurality of Litz wires to form a working coil and winding the working coil spirally a plurality of times to have a multi-layer structure.

In this case, each burner necessarily needs to be provided with a coil frame to maintain and support the winding shape of the working coil.

Therefore, the vertical size of the individual burner, which is the sum of the vertical size of the working coil wound in a multi-layer structure and the vertical size of the coil frame, inevitably accounts for a considerably large proportion with respect to the vertical size of the entire cooktop.

Due to this limitation in the size of the individual burner constituting the cooktop, conventional cooktops inevitably had a limitation in increasing the output of the individual burner.

Additionally, in the case of constructing a cooktop with a plurality of burners, conventional cooktops had spatial limitations in that there is very little space for installing other components or parts, and therefore the total number of burners that can be installed on the cooktop was inevitably very limited.

As an alternative to the Litz wire type working coil, a technology has been developed for a cooktop in which a burner is formed by forming the working coil in the form of a spiral multi-layer pattern on a printed circuit board. (Prior Document 001, Design and Optimization of Small Inductors on Extra-Thin PCB for Flexible Cooking Surfaces/IEEE TRANSACTIONS ON INDUSTRY APPLICATIONS, VOL. 53, NO. 1, JANUARY/FEBRUARY 2017)

The cooktop disclosed in Prior Document 001 can be configured to form a burner by forming a spirally wound working coil pattern in a single layer or in a plurality of layers on a single printed circuit board.

In this way, the cooktop disclosed in Prior Document 001 has advantages in that the size of the cooktop in the up and down directions can be significantly reduced compared to a conventional cooktop since the working coil patterns forming the burner are integrally formed on a single printed circuit board, thereby improving the space utilization in the up and down directions, and in that the number of burners can be significantly increased compared to a conventional cooktop, thereby improving the horizontal direction space utilization.

### [Disclosure]

### [Technical Problem]

The cooktop disclosed in the above-described Prior Document 001 has a problem in that since a temperature sensor for sensing the temperature of the container or the temperature of the top plate for the container to be seated on is not provided on the printed circuit board on which the working coil pattern is formed, the temperature of the container or the top plate cannot be effectively sensed.

Additionally, the cooktop disclosed in Prior Document 001 has a problem in that if the temperature sensor is to be disposed at a position other than the printed circuit board on which the working coil pattern is formed, an additional space for the installation of the temperature sensor needs to be secured between the printed circuit board and the top plate.

Additionally, the cooktop disclosed in Prior Document 001 has a problem in that, when the temperature sensor is installed separately, an additional structure for fixing the temperature sensor and an additional wiring for electrically connecting the temperature sensor to a control board circuit need to be secured.

Additionally, the cooktop disclosed in Prior Document 001 has a problem in that, if the temperature sensor is installed separately, a process for disposing the temperature sensor in the cooktop needs to be added, which thus leads to increases in the manufacturing cost and the manufacturing time.

The present invention has been conceived to solve such problems of the prior art, and a first purpose of the present invention is to provide a cooking appliance in which it is possible to prevent deterioration in space utilization by forming a through hole, into which a temperature sensor can be at least partially inserted and coupled, on a coil circuit board module in which a working coil pattern is formed, while enabling the temperature sensor to be effectively installed without securing a separate installation space for the temperature sensor.

Additionally, the second purpose of the present invention is to provide a cooking appliance in which the configuration is made such that the temperature sensor is disposed in a central inner region in which no working coil pattern is formed, and which is in the inner side of the working coil pattern formed on a coil circuit board module and generating a magnetic field, thereby enabling the central inner region, which otherwise would be a meaningless dummy region, to be utilized as an installation space for the temperature sensor, which thus leads to the improvement in the usability of the coil circuit board module with respect to the substrate area.

Additionally, the third purpose of the present invention is to provide a cooking appliance in which the configuration is made such that the temperature sensor is installed in a through hole through a sensor holder resiliently supporting the temperature sensor in a state where the temperature sensor is separated from the coil circuit board module, thereby being capable of minimizing the conduction of emission of heat generated from the working coil pattern to the temperature sensor, which thus leads to the improvement in the accuracy of temperature sensing for the container or top plate.

Additionally, the fourth purpose of the present invention is to provide a cooking appliance in which it is possible to effectively prevent overheating of the working coil pattern and the coil circuit board module by forming at least one ventilation hole in the bridge portion of the sensor holder that generates a restoring force pressing the upper surface, which becomes the sensing surface of the temperature sensor, toward the top plate.

The purposes of the present invention are not limited to the purposes mentioned above, and other purposes and advantages of the present invention which are not mentioned can be appreciated from the following description, and will be more clearly appreciated by the embodiments of the present invention. Furthermore, it is readily understood that the objects and advantages of the present invention can be achieved by the means set forth in the claims and combinations thereof.

### [Technical Solution]

A cooking appliance according to the present invention includes a top plate for a container to be seated on; a heating part generating a magnetic field to cause the container to emit heat; and a temperature sensor sensing a temperature of the top plate, and is characterized in that the heating part includes a coil circuit board module having a working coil pattern formed to be wound spirally so as to generate the magnetic field and a sensing coil pattern formed to be wound spirally so as to sense whether the container is seated, and in that the temperature sensor is disposed in the coil circuit board module so as to belong to an area where neither the working coil pattern nor the sensing coil pattern is formed.

Also, the temperature sensor may be disposed so as not to overlap the sensing coil pattern and the working coil pattern.

Also, the coil circuit board module may be provided with an upper surface arranged to face upward and a lower surface arranged to face downward, and the coil circuit board module may be provided with an insertion hole formed to be penetrated from the upper surface to the lower surface, and the temperature sensor may be at least partially inserted into the insertion hole, and be disposed in the insertion hole in a state of being separated from the coil circuit board module.

Also, the working coil pattern or the sensing coil pattern may have a central inner region formed in an inner side thereof, in which no pattern is formed, and the insertion hole may be disposed in the central inner region, and a cross-sectional area of the nsertion hole may be formed to be smaller than an area of the central inner region.

Also, the insertion hole may have a circular cross-section.

Also, a cross-sectional area of the insertion hole may be formed to be larger than a maximum cross-sectional area of the temperature sensor in a horizontal direction.

Also, an upper surface of the temperature sensor may be disposed in a position higher than the upper surface of the coil circuit board module.

Also, a lower surface of the temperature sensor may be disposed in a position lower than the upper surface of the coil circuit board module based on up and down directions.

Also, it may further include a sensor holder supporting the temperature sensor in a state of separating the temperature sensor from the coil circuit board module.

Also, the sensor holder may include a sensor coupling portion into which the temperature sensor is at least partially inserted and coupled; a substrate coupling portion coupled to the insertion hole; and a bridge portion disposed between the sensor coupling portion and the substrate coupling portion and connecting the sensor coupling portion with the substrate coupling portion.

Also, when the coil circuit board module is disposed under the top plate in a state where the temperature sensor is inserted into the insertion hole through the sensor holder, the bridge portion may apply to the temperature sensor a force acting so as to press an upper surface of the temperature sensor toward the top plate.

Also, the sensor coupling portion may be resiliently coupled to a lower portion of the temperature sensor.

Also, the substrate coupling portion may be resiliently coupled to an edge of the insertion hole.

Also, the bridge portion may be provided with a ventilation hole formed to be penetrated along up and down directions.

Also, the sensor holder may include a sensor coupling portion into which the temperature sensor is at least partially inserted and coupled, and the sensor coupling portion may be resiliently coupled to an edge of the insertion hole.

### [Advantageous Effects]

The present invention has an effect in that it is possible to prevent deterioration in space utilization by forming a through hole, into which a temperature sensor can be at least partially inserted and coupled, on a coil circuit board module in which a working coil pattern is formed, while enabling the temperature sensor to be effectively installed without securing a separate installation space for the temperature sensor.

Additionally, the present invention has an effect in that the configuration is made such that the temperature sensor is disposed in a central inner region in which no working coil pattern is formed, and which is in the inner side of the working coil pattern formed on a coil circuit board module and generating a magnetic field, thereby enabling the central inner region, which otherwise would be a meaningless dummy region, to be utilized as an installation space for the temperature sensor, which thus leads to the improvement in the usability of the coil circuit board module with respect to the substrate area.

Additionally, the present invention has an effect in that the configuration is made such that the temperature sensor is installed in a through hole through a sensor holder resiliently supporting the temperature sensor in a state where the temperature sensor is separated from the coil circuit board module, thereby being capable of minimizing the conduction of emission of heat generated from the working coil pattern to the temperature sensor, which thus leads to the improvement in the accuracy of temperature sensing for the container or top plate.

Additionally, the present invention has an effect in that it is possible to effectively prevent overheating of the working coil pattern and the coil circuit board module by forming at least one ventilation hole in the bridge portion of the sensor holder that generates a restoring force pressing the upper surface, which becomes the sensing surface of the temperature sensor, toward the top plate.

In addition to the effects described above, specific effects of the present invention will be described below together with specific matters for practicing the invention.

### [Description of Drawings]

FIG. 1 is a front perspective view of a cooking appliance according to one embodiment of the present invention.
FIG. 2 is a plan view of the cooking appliance illustrated in FIG. 1.
FIG. 3 is a plan view of the cooking appliance shown in FIG. 1, and is a view showing a lighting status of an indication line.
FIG. 4 is an exploded perspective view of the cooktop of the cooking appliance illustrated in FIG. 1.
FIG. 5 is a partially enlarged view of FIG. 4.
FIG. 6 is a plan view of the cooktop illustrated in FIG. 4, and is a view of a part under a top plate when seen through it.
FIG. 7 is a schematic cross-sectional view for explaining the layered structure of the first coil circuit board module illustrated in FIG. 4.
FIG. 8 is a plan view of the first layer constituting the layered structure of the first coil circuit board module illustrated in FIG. 4, and FIG. 9 is a partial enlarged view of FIG. 8.
FIG. 10 is a plan view of the second layer constituting the layered structure of the first coil circuit board module illustrated in FIG. 4.
FIG. 11 is a partial enlarged view of FIG. 8, and is a view showing together the patterns formed in the first to twelfth layers.
FIG. 12 is a plan view of the third to seventh layers constituting the layered structure of the first coil circuit board module illustrated in FIG. 4.

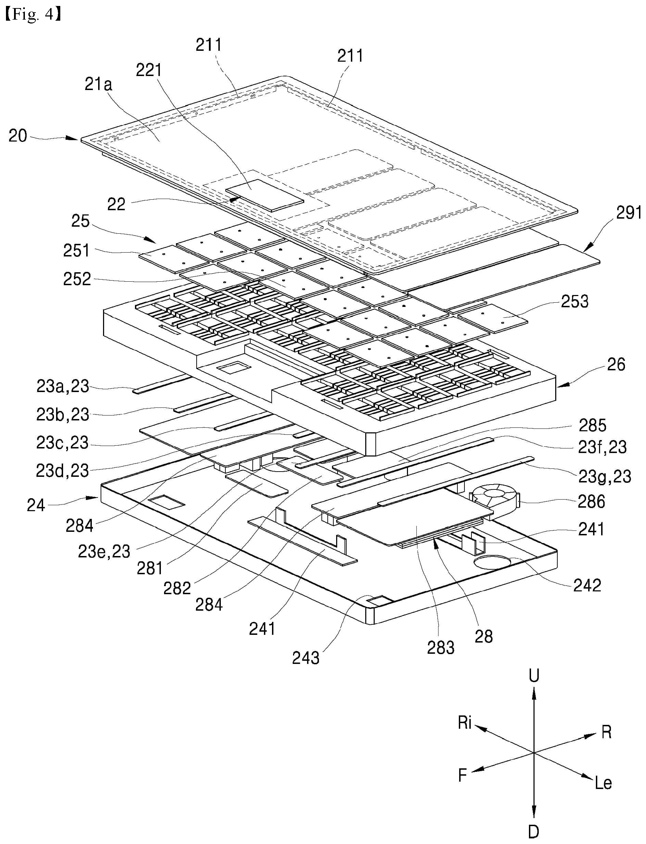

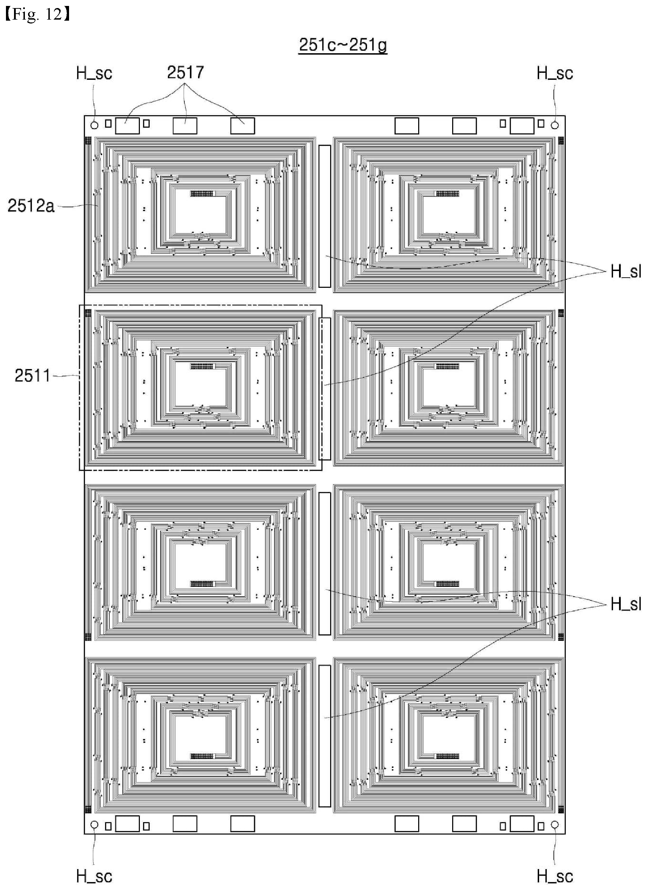

FIG. 12 is a plan view of the eighth to twelfth layers constituting the layered structure of the first coil circuit board module illustrated in FIG. 4.

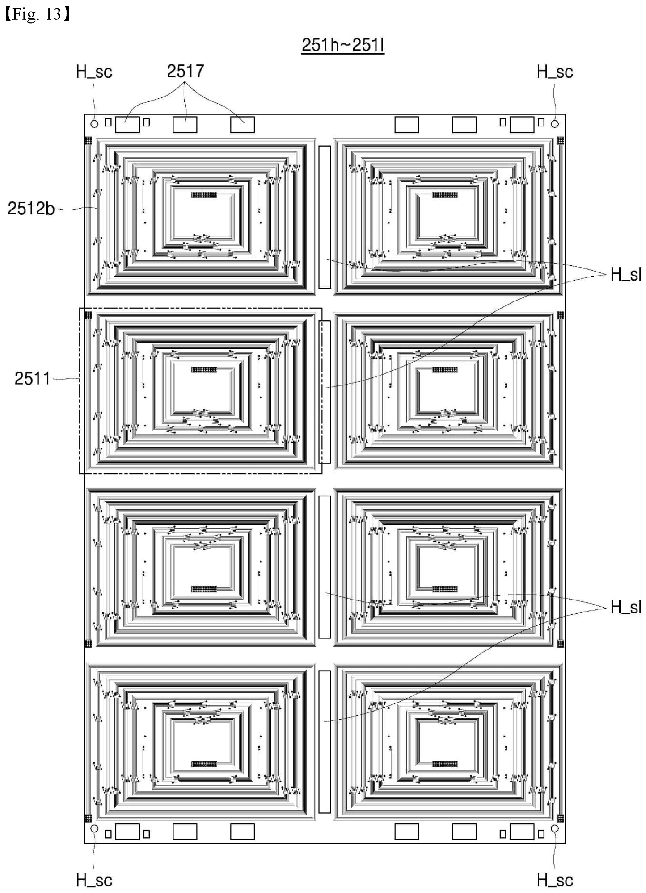

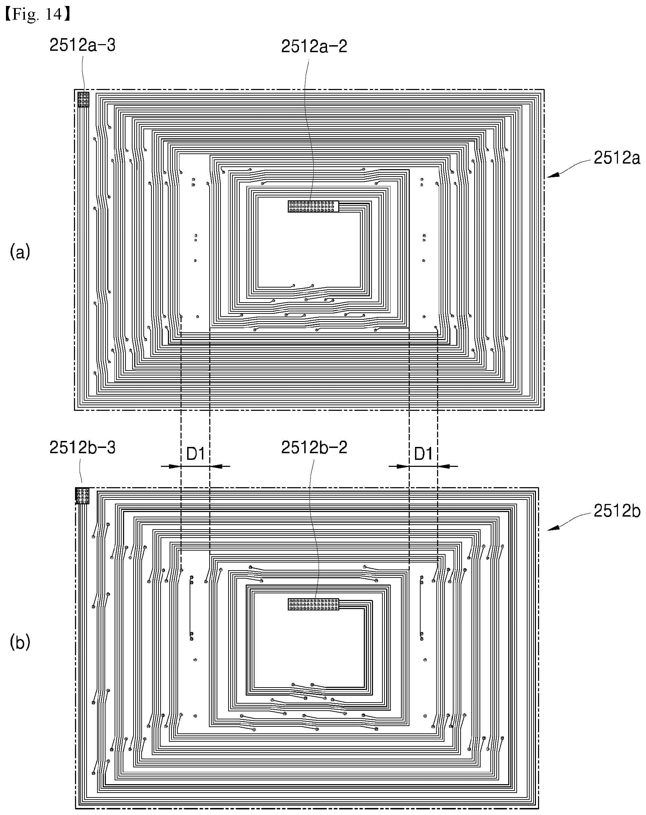

FIG. 14(a) is a plan view illustrating a portion of the first type pattern illustrated in FIG. 12, and FIG. 14(b) is a plan view illustrating a portion of the second type pattern illustrated in FIG. 13.

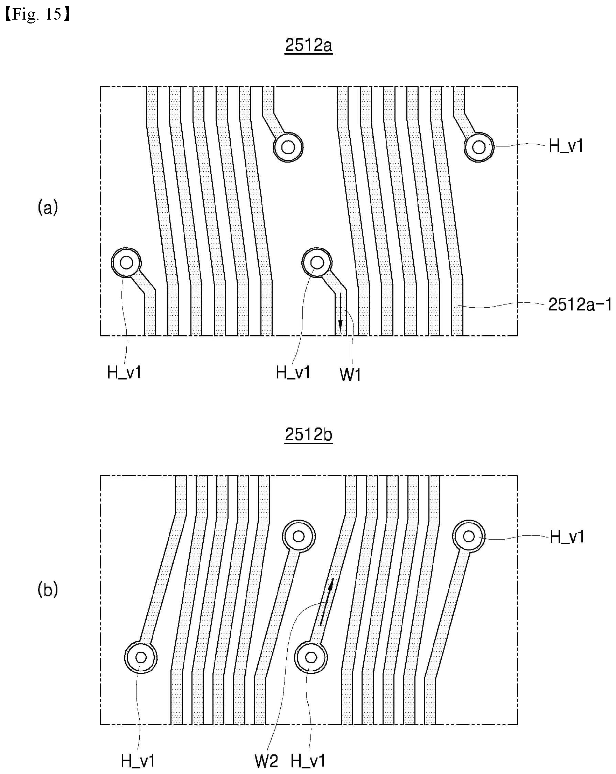

FIG. 15(a) is a partial enlarged view of FIG. 14(a), and FIG. 15(b) is a partial enlarged view of FIG. 14(b).

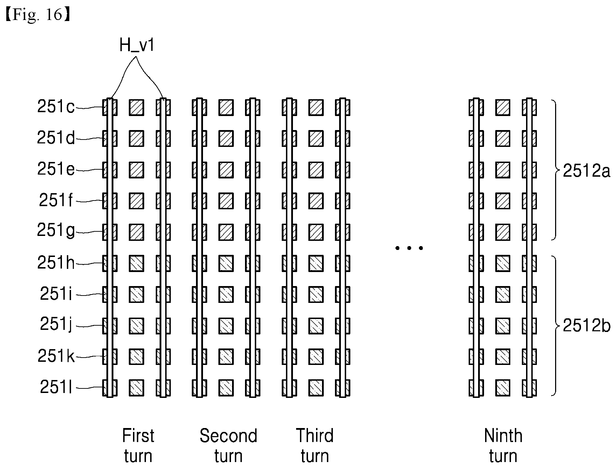

FIG. 16 is a schematic cross-sectional view for explaining a structure in which the first type pattern constituting the third to seventh layers shown in FIG. 4 and the second type pattern constituting the eighth to twelfth layers are collectively connected through working coil via holes.

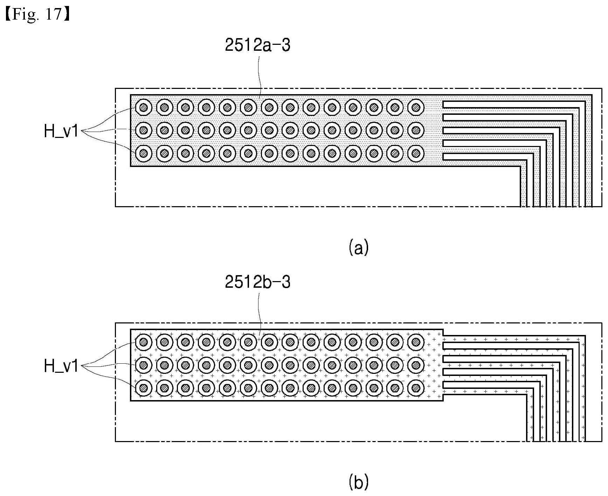

FIG. 17(a) is a partial enlarged view of FIG. 14(a), and FIG. 17(b) is a partial enlarged view of FIG. 14(b), which are partial enlarged views for explaining the common terminal of the first type pattern and the common terminal of the second type pattern, respectively.

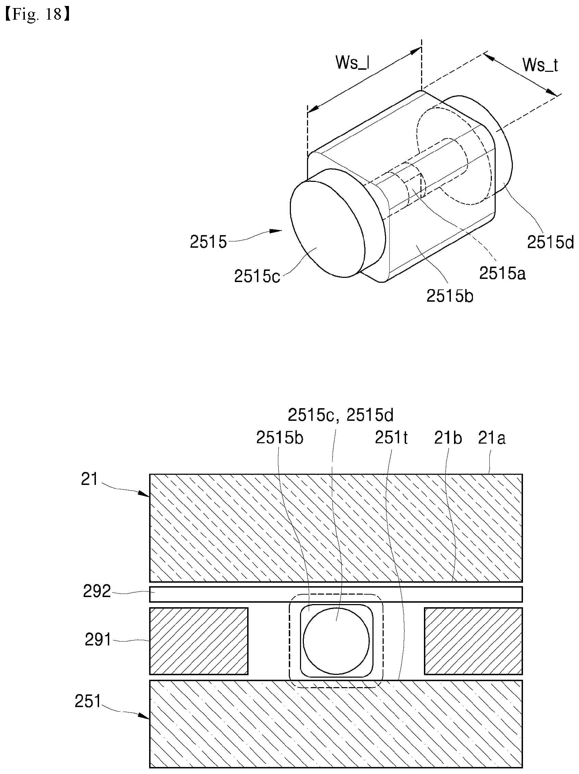

FIG. 18 is a schematic cross-sectional view illustrating a state in which a temperature sensor is mounted on a first coil circuit board module with the sensor body of the temperature sensor in contact with the upper surface of the first coil circuit board module.

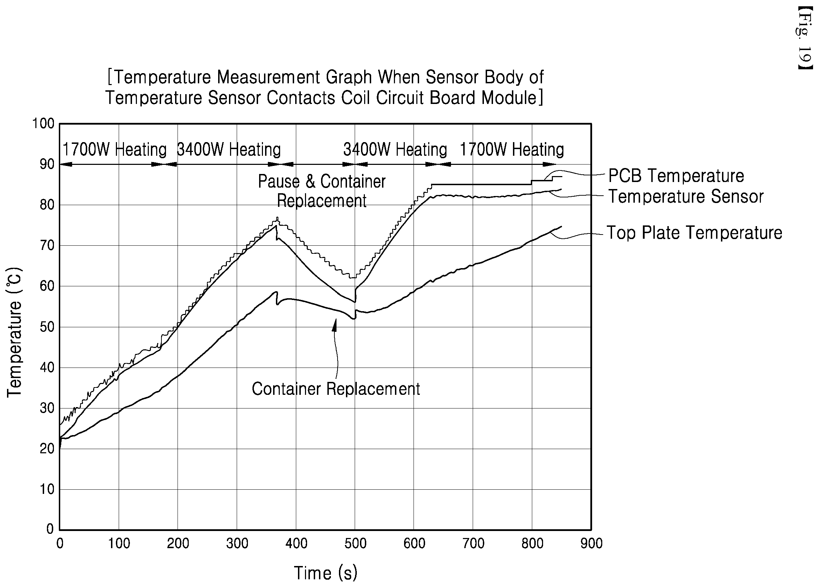

FIG. 19 is a time-temperature graph for explaining the temperature change trend measured in a state where the sensor body of the temperature sensor is in contact with the upper surface of the first coil circuit board module.

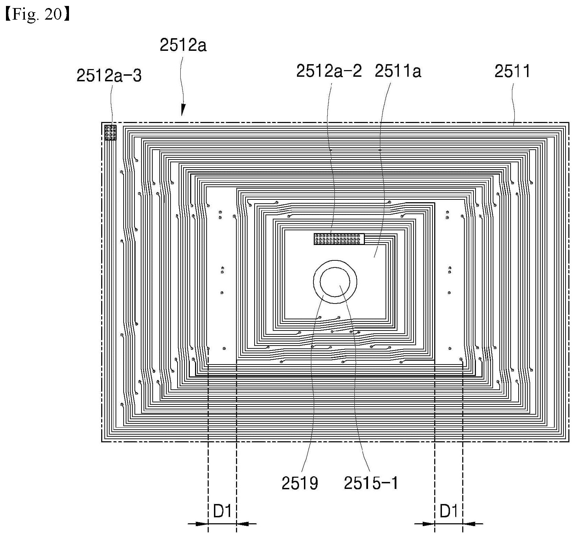

FIG. 20 is a plan view for explaining a state where a temperature sensor is installed through a sensor holder in a through hole formed in a first coil circuit board module according to an embodiment of the present invention.

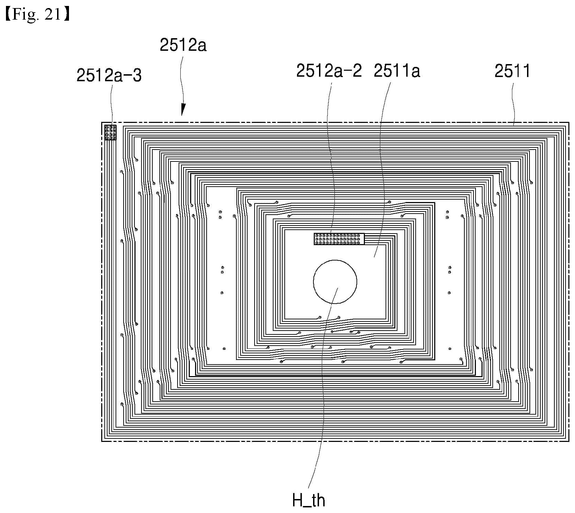

FIG. 21 is a plan view showing the configuration illustrated in FIG. 20 with the temperature sensor and the sensor holder removed.

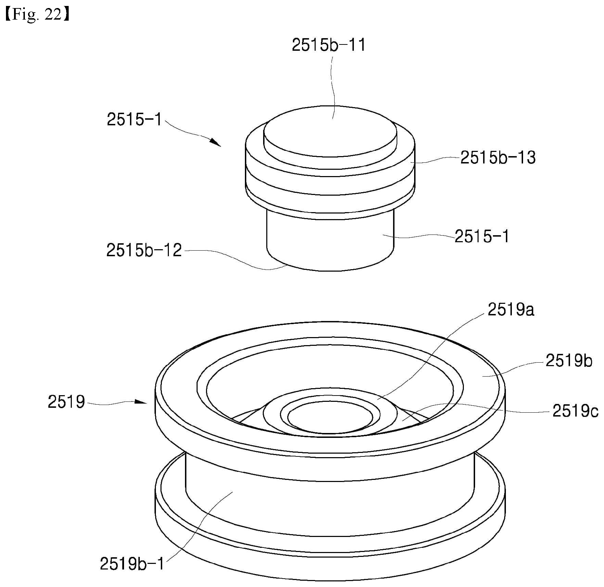

FIG. 22 is an exploded perspective view of the temperature sensor and the sensor holder illustrated in FIG. 20.

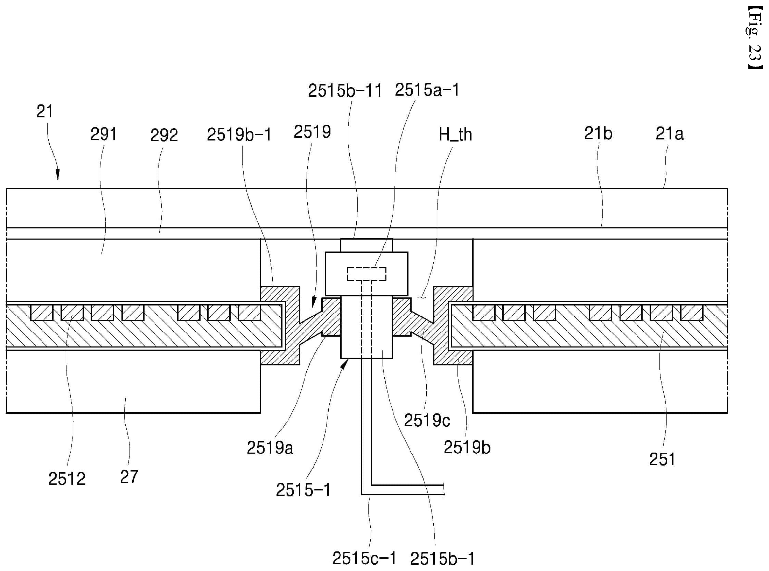

FIG. 23 is a schematic cross-sectional view for explaining a configuration in which a temperature sensor is supported through a sensor holder in a state of being separated from a first coil circuit board module.

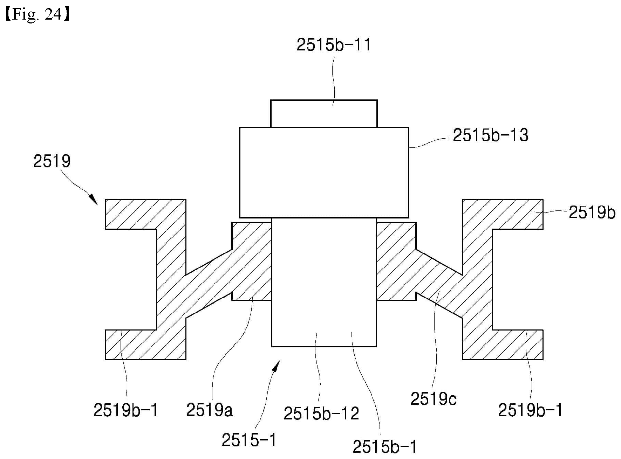

FIG. 24 is a partially enlarged view of FIG. 23 for explaining detailed configurations of the temperature sensor and the sensor holder.

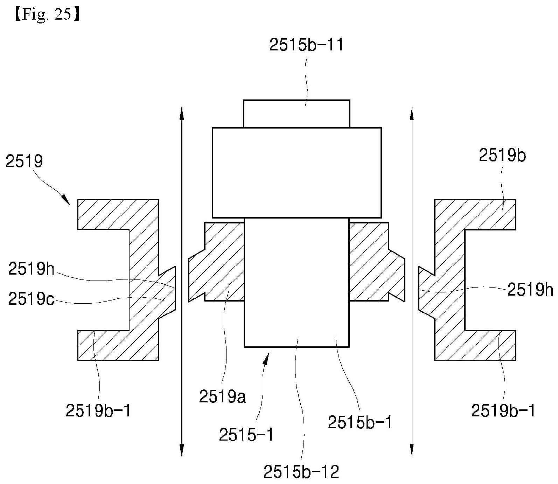

FIG. 25 is a schematic cross-sectional view illustrating a configuration in which a ventilation hole is additionally formed in the configuration shown in FIG. 24 according to another embodiment of the present invention.

### [Best Mode]

The purposes, features and advantages described above will be described in detail below with reference to the accompanying drawings, so that a person having ordinary knowledge in the technical field to which the present invention pertains can easily practice the technical idea of the present invention. In describing the present invention, if it is determined that a detailed description of a known technology related to the present invention may unnecessarily obscure the gist of the present invention, the detailed description thereof will be omitted. Hereinafter, preferred embodiments of the present invention will be described in detail with reference to the accompanying drawings. In the drawings, like reference numerals are used to refer to like or similar components.

Although the terms "first", "second", and so on are used to describe various components, these components are not limited by these terms. These terms are merely used to distinguish one component from another component, and unless specifically stated to the contrary, it should be understood that a first component may also be a second component.

Throughout the specification, unless specifically stated to the contrary, each element may be singular or plural.

Hereinafter, the phrase "any configuration is disposed in the upper side of (or in the lower side of) a component" or "on (or below) a component" may mean not only that any configuration is disposed in contact with the upper surface (or lower surface) of said component, but also that another configuration may be interposed between said component and any configuration disposed on (or below) said component.

Additionally, when a component is described as being "connected," "coupled," or "contacted" to another component, it should be understood that although the both components may be directly connected, coupled or contacted to each other, a third component may also be "interposed" between the both components, or the both components may be "connected," "coupled," or "contacted" to each other through a third component.

As used herein, singular expressions include plural expressions unless the context clearly dictates otherwise. Herein, the terms "be comprised of" or "comprise" should not be construed to necessarily include all of the various components or various steps described in the specification, and should be construed to mean that some of the components or some of the steps may not be included, or that additional components or steps may be included.

Additionally, singular expressions used herein include plural expressions unless the context clearly indicates otherwise. Herein, the terms "be comprised of" or "comprise" should not be construed to necessarily include all of the various components or various steps described in the specification, and should be construed to mean that some of the components or some of the steps may not be included, or that additional components or steps may be included.

Throughout the present document, "A and/or B" means A, B, or A and B, unless otherwise specified, and "C to D" means equal to or greater than C and equal to or smaller than D unless otherwise specified.

### [Overall structure of cooking appliance]

Hereinafter, the overall structure of a cooking appliance 1 according to an embodiment of the present invention will be described in detail with reference to the accompanying drawings.

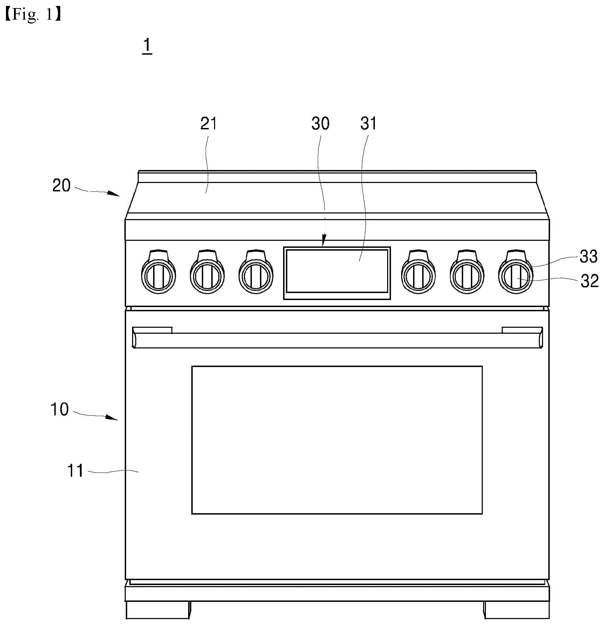

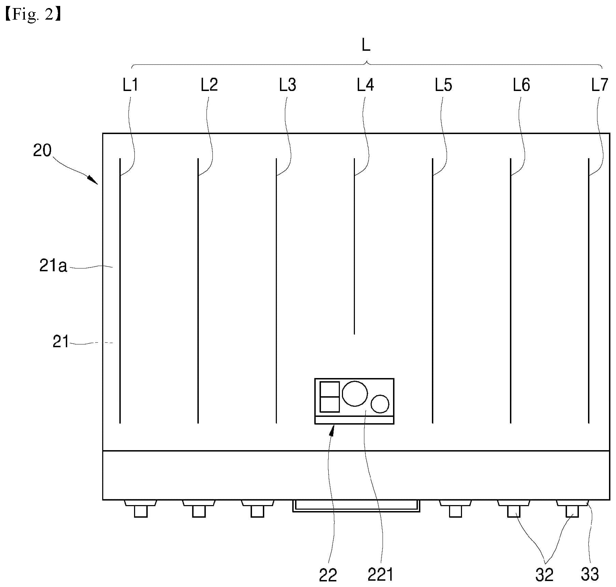

FIG. 1 is a perspective view illustrating a cooking appliance 1 according to an embodiment of the present invention, and FIG. 2 is a plan view of a cooktop 20 constituting the cooking appliance 1 shown in FIG. 1, when viewed from above.

Referring to FIGS. 1 to 3, the cooking appliance 1 according to an embodiment of this invention may be constructed by including the cooktop 20 and an oven part 10 disposed under the cooktop 20.

As described above, the cooking appliance 1 according to the embodiment of this invention may be an oven range type in which the cooktop 20 is disposed in the upper side and the oven part 10 is disposed in the lower side. However, the present invention is not limited to this, and may be configured as a cooking appliance 1 in which the cooktop 20 is provided alone. Hereinafter, the description will be made based on a cooking appliance 1 configured as an oven range type as illustrated by way of example.

The cooking appliance 1 of the embodiment of the present invention can provide both the function of an oven, which is a closed cooking means, and the function of a cooktop, which is an open means, by being provided in the form of an oven range.

A cooking chamber may be formed inside the oven part 10, which is a closed cooking means. In the oven part 10, food can be cooked as the inside of the cooking chamber is heated.

To this end, although not shown, the oven part 10 may be provided with a heating part for heating the inside of the cooking chamber. The heating part may be a heating device using gas fuel or electricity.

The oven part 10 of the cooking appliance 1 may be provided with a rotatable door 11 which selectively opens and closes the cooking chamber.

For example, the door 11 may be provided in the oven part 10 in the form of opening and closing the cooking chamber in a pull-down manner, in which its upper end is pivoted along the up and down directions around its lower end.

On the upper portion of the front surface of the cooking appliance 1, a control panel 30 may be provided for manipulating the oven part 10 and the cooktop 20.

By being disposed in the front surface of the cooking appliance 1, the control panel 30 can form a portion of the front exterior of the cooking appliance 1.

This control panel 30 may be provided with a plurality of switches for controlling the operation of the cooking appliance 1 and a display 31 displaying the operation status of the cooking appliance 1.

Also, as shown, a plurality of knobs 32 may be further equipped on the control panel 30 of the cooking appliance 1. That is, the control panel 30 provided in the upper portion of the front surface of the cooking appliance 1 may be provided with a plurality of knobs 32 for adjusting the operation of the cooking appliance 1 together with the display 31.

Each knob 32 may be provided in the form of being capable of rotational manipulation. These knobs 32 may be provided so as to be able to operate any one of the oven part 10 and the cooktop 20, or may be provided so as to be able to operate both the oven part 10 and the cooktop 20.

By the manipulation of the knobs provided as described above, any one of a plurality of preset cooking modes can be selected, or a heating temperature or a heating step can be selected.

Additionally, the control panel 30 of the cooking appliance 1 according to the present embodiment may be further provided with a knob ring 33. The knob ring 33 may be disposed in the radial direction outer side of the knob 32. For example, the knob ring 33 may be provided in a ring shape surrounding the knob 32 in the radial direction outer side.

The knob ring 33 can perform a role of supporting the knob 32, and a role of finishing the outer appearance surrounding the knob 32 to improve the outer appearance quality of the cooking appliance 1.

Additionally, the knob ring 33 of this embodiment may perform both a role as a timer manipulation switch, and a role of displaying the timer time and the heating power intensity.

The knob ring 33 may be installed to be independently rotatable with respect to the knob 32, and the timer time may be set through the rotational manipulation of the knob ring 33 installed as described above.

Meanwhile, as described above, the cooktop 20 may be disposed in the upper side of the oven part 10.

The cooktop 20 may perform a function of heating food or a container containing food, which is seated on the top surface of the cooktop 20.

To this end, the cooktop 20 may include a top plate 21, which forms the top surface of the cooktop 20, and on which a container containing food is seated.

Additionally, in the inside of the cooktop 20 under the top plate 21, a heating part may be provided for heating a container containing food.

The heating part may be constructed by including at least one or more burners. For example, the burner constituting the heating part may be provided in the form of including a working coil converting the supplied electrical force into magnetic force or a heating wire coil converting the supplied electrical force into thermal energy.

The cooktop 20 of the cooking appliance 1 according to an embodiment of the present invention may be provided to be of an induction heating manner.

To this end, the burner of the cooktop 20 may constructed by including the working coil. The burner including the working coil like this can be operated by a high-frequency current generated and supplied by an inverter to generate a strong magnetic field.

The magnetic field generated in the burner including the working coil like this can generate eddy current in the container containing a metal component, and as the eddy current flows through the container, heat can be generated, which can heat the container, and by the heating of the container, the food contained in the container can be heated.

However, as in the usual construction, the working coil applied to the cooktop of the conventional induction heating manner was formed by twisting a plurality of electrically conductive wires to form a cable and winding the cable in a spiral shape.

However, as will be described later, the working coil constituting the cooktop 20 of the cooking appliance 1 according to an embodiment of the present invention may be constructed with a plurality of patterns stacked spirally and formed on printed circuit boards.

As such, the working coil of the cooking appliance 1 according to the present invention may be referred to as a working coil pattern since it has a structure formed and stacked on printed circuit boards.

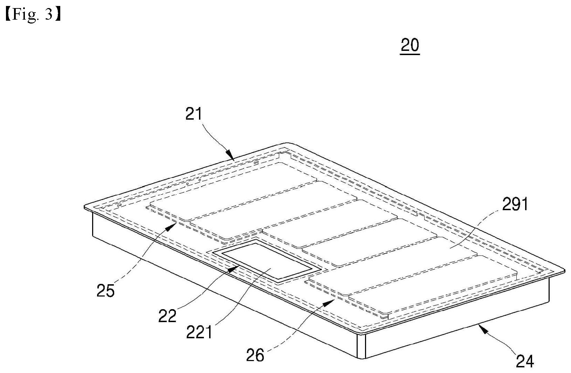

The detailed configuration of the heating part including the working coil pattern will be described later with reference to FIG. 3 and the drawings after it.

### [Overall configuration of cooktop]

Hereinafter, the configuration of the cooktop 20 constituting the cooking appliance 1 according to an embodiment of the present invention will be described with reference to FIGS. 3 to 5.

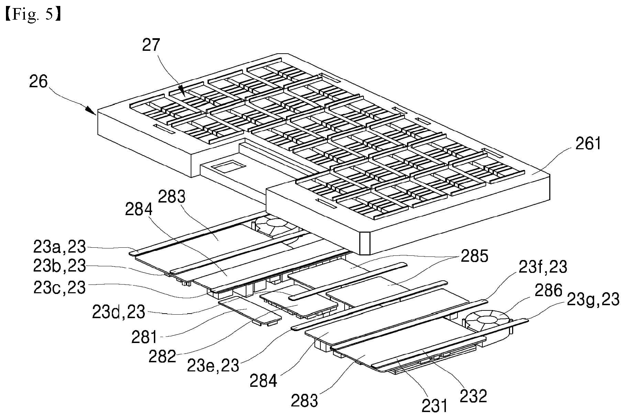

FIG. 3 is a plan view of the cooktop 20 with indication lines L in a lighting status, when viewed from above; FIG. 4 is an exploded perspective view of the cooktop 20 shown in FIG. 3; and FIG. 5 is a plan view seeing-through the inside of the cooktop 20 shown in FIG. 3.

First, referring to FIGS. 3 to 4, similar to the oven part 10 described above, the cooktop 20 according to this embodiment may include a control panel 22.

As shown, the control panel 22 of the cooktop 20 may be disposed in the top plate 21, and, more particularly, may be disposed in a position biased toward the front for user convenience.

This control panel 22 may be provided with various switches for adjusting the operation of the cooktop 20, a display panel 221 displaying the operation status of the cooktop 100, and the like.

As will be described later, when it is detected through a sensing coil pattern 2514 that the container is seated on the top surface 21a of the top plate 21, the display panel 221 of the control panel 22 provided in the cooktop 20 may display an icon corresponding to the container. For example, the icon may be provided in a form corresponding to the size and shape of the container, and may be disposed at a position in the display panel 221 corresponding to the position of the cooking appliance 1.

By pressing the displayed icon, the user can select a container indicated by the icon, and perform the manipulation for controlling the operation of the cooking appliance 1 with respect to the selected container.

For example, a user can select a container to be operated by pressing an icon, and then select a desired heating temperature for that container.

As described above, when the heating of the container through the manipulation of the control panel 22 is started, it may be displayed on the top plate 21 through the indication line L, as shown in FIG. 3, that the heating of the container has been started.

As shown in FIG. 3, a plurality of indication lines L may be provided in the top plate 21 of the cooktop 20.

The indication line L displays information related to the position of the container, the heating state of the container, the temperature, and the like on the top plate 21 in the form of a light emitting area, so that the corresponding information can be visually transmitted to the user.

FIG. 3 shows, by way of example, an embodiment in which a total of seven indication lines L are provided. These indication lines L may be conveniently named as the first to seventh indication lines L1, L2, L3, L4, L5, L6, L7 from the left side based on the top plate 21. The present invention is not limited to this, but, for convenience, the following description will be based on an embodiment in which a total of seven indication lines L are provided as shown.

These indication lines L may be light-emitting regions formed such that the width in the left and right directions is much smaller than the width in the front and rear directions, as shown.

The indication line L may be implemented by a light source module 23 disposed in the substrate supporter 26 to be described later under the top plate 21 so that each indication line L may be formed in the form of a light-emitting region.

The light source module 23 may be constructed by including a plurality of light source elements 231 generating visible light, and a light source circuit board 232 on which the plurality of light source elements 231 are mounted.

The plurality of light source elements 231 may be disposed so as to irradiate visible light toward the bottom surface of the top plate 21, and, as described below, the incident visible light may pass through a light-transmitting hole formed to penetrate the substrate supporter 26, a light-transmitting slit hole H_sl formed in each coil circuit board module constituting the heating part 25, and a gap formed between adjacent coil circuit board modules to be irradiated to the bottom surface of the top plate 21.

The light source module 23 may be constructed by including the plurality of light source elements 231 receiving power and generating visible light, and the light source circuit board 232 on which the plurality of light source elements 231 are mounted.

There is no limitation to applying means to the light source element 231 as long as it can receive power to generate a predetermined amount of visible light, and the means may include, for example, an LED element. The present invention will be described below based on, but not limited to, an example in which an LED element is applied as the light source element 231.

As illustrated, each light source circuit board 232 may extend linearly along the front and rear directions, corresponding to each indication line L extending linearly, and a plurality of light source elements 231 may be linearly arranged and disposed on each light source circuit board 232 so as to be spaced apart from one another at equal intervals or at unequal intervals along the front and rear directions.

Additionally, as described above, a plurality of light source modules 23 may be provided so as to irradiate visible light respectively and independently to the first indication line to the seventh indication line L1, L2, L3, L4, L5, L6, L7, and this plurality of light source modules 23 may be conveniently referred to as first to seventh light source modules 23a, 23b, 23c, 23d, 23e, 23f, 23g from the left side based on the top plate 21.

Corresponding to the first indication line to the seventh indication line L1, L2, L3, L4, L5, L6, L7, the first light source module to the seventh light source module 23a, 23b, 23c, 23d, 23e, 23f, 23g may be disposed to be spaced apart from each other at predetermined intervals along the left and right directions.

As described below, the distance between adjacent indication lines L and the distance between adjacent light source modules 23 may be formed to have a width equal to or slightly greater than the width in the left and right directions of the working coil pattern 2512 constituting the heating part 25.

Meanwhile, as illustrated, the cooktop 20 of the cooking appliance 1 according to an embodiment of the present invention may include a bottom case 24 forming the front surface, the rear surface, both side surfaces, and the bottom surface of the exterior of the cooktop 20.

The bottom case 24 may be formed such that its top surface is entirely open, and the top plate 21 described above may be coupled to the open top surface.

As shown in FIG. 3, a fastening bracket 211 for coupling to the bottom case 24 may be provided on the bottom surface of the top plate 21 at a position corresponding to the upper end of the bottom case 24.

In this manner, as the top plate 21 is coupled to the upper side of the bottom case 24, the interior space surrounded by the top plate 21 and the bottom case 24 may accommodate a plurality of internal components constituting the cooktop 20.

Additionally, the bottom case 24 may be provided with a plurality of mount brackets 241, either integrally or separately.

The mount bracket 241 may be disposed in the interior space of the cooktop 20, and may be formed protrudingly upward from the bottom surface of the mount bracket 241 toward the electronic components.

This mount bracket 241 may support various electronic components 28 constituting the cooktop 20 from below, thereby limiting the sagging occurrence of components such as the main circuit board module 281, SMPS circuit board module 282, inverter circuit board module 283, resonant circuit board module 284, EMI filter module 285, and the like, and serving to support them.

Further, as shown in FIG. 4, an intake hole 242 and an exhaust hole 243, through which air for cooling various electronic components constituting the cooktop 20 can flow in and out, may be formed to penetrate the bottom surface 24a of the bottom case 24 along the up and down directions.

Meanwhile, the cooktop 20 of the cooking appliance 1 according to an embodiment of the present invention may further include the heating part 25 having a working coil that heats a container by an induction heating method, and as described above, the working coil may be constructed with a plurality of working coil patterns 2512 formed by being stacked spirally on a printed circuit board.

Considering that a plurality of working coil patterns 2512 are stacked in a plurality of layered structures to form a burner, the printed circuit board formed by stacking working coil patterns 2512 may be referred to as a coil circuit board module.

The coil circuit board module constituting the heating part 25 may be provided in plural in consideration of manufacturing convenience and efficiency.

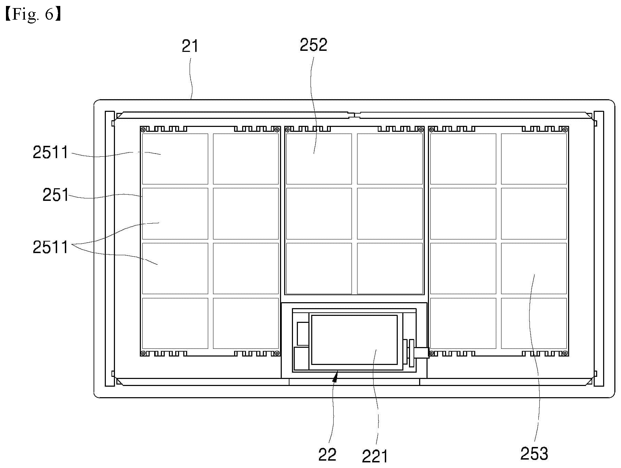

FIGS. 4 and 6 illustrate, by way of example, an embodiment of the cooktop 20 provided with the heating part 25 including a total of three coil circuit board modules. The present invention is not limited to this; however, the following description will be made based on an embodiment in which three coil circuit board modules are provided as illustrated by way of example.

The three coil circuit board modules 251, 252, 253 are hereinafter referred to as the first coil circuit board module 251, the second coil circuit board module 252, and the third coil circuit board module 253 in order from the left.

In each of the coil circuit board modules 251, 252, 253, a plurality of burners 2511 may be formed to heat a container.

In FIG. 6, an embodiment is shown, by way of example, in which the first coil circuit board module 251 and the third coil circuit board module 253 may each be provided with eight burners 2511, and the second coil circuit board module 252 may be provided with six burners 2511. As described below, the number of these burners 2511 and the size of the burners 2511 can be set differently depending on the size and output of the cooktop 20. Hereinafter, an example will be described based on an embodiment in which eight first coil circuit board module 251 and the third coil circuit board module 253 each have eight burners 2511, and the second coil circuit board module 252 has six burners.

Additionally, although FIG. 6 shows that the shape and size of each burner 2511 are the same, this is merely illustrative, and similarly, the shape and size of the burner 2511 may be set differently depending on the size and output of the cooktop 20.

In each of the coil circuit board modules 251, 252, 253, a working coil pattern 2512 forming this plurality of burners 2511 may be formed by being stacked in multiple layers.

Additionally, in each of the coil circuit board modules 251, 252, 253, a sensing coil pattern 2514 may be stacked to form a means for detecting whether a container is seated at a specific location on the top surface 21a of the top plate 21.

Additionally, in each of the coil circuit board modules 251, 252, 253, a temperature sensor 2515 may be provided for detecting the temperature of each top plate 21.

In this case, as described later, the working coil pattern 2512, the sensing coil pattern 2514, and the temperature sensor 2515 may be provided in the form of being constructed integrally into each of the coil circuit board modules 251, 252, 253. Therefore, the heating part 25 of the cooktop 20 according to the present invention can have a significantly reduced width in the up and down directions compared to conventional heating ones, which allows the size of the cooktop 20 in the up and down directions to be reduced, resulting in a significant improvement in space utilization and significant simplication of the manufacturing process of the cooktop 20.

The working coil pattern 2512 and the sensing coil pattern 2514 may be extended spirally, and be provided in the form of being stacked in the up and down directions.

In this case, as described later, each of the first to third coil circuit board modules 251, 252, 253 may be formed, by way of example, in a form in which the working coil pattern 2512 is stacked in 10 to 12 layers and the sensing coil pattern 2514 is stacked in 2 layers, along the up and down directions. Therefore, each of the coil circuit board modules 251, 252, 253 can have a layered structure having 12 to 14 layers.

Meanwhile, each of the sensing coil pattern may be disposed in the inside of a region occupied by the working coil pattern 2512 forming the individual burner 2511, or may also be disposed in a region between a pair of adjacent working coil patterns 2512.

In this embodiment, in consideration of the efficiency and accuracy of container detection, a pair of sensing coil patterns 2514 may be disposed in the inside of the region occupied by each of the working coil patterns 2512, and a pair of sensing coil patterns 2514 may be disposed in the region between the adjacent pair of working coil patterns 2512.

Meanwhile, the temperature sensor 2515 for sensing the temperature of the top plate 21 may be disposed at a position which is the center of each of the sensing coil patterns 2514.

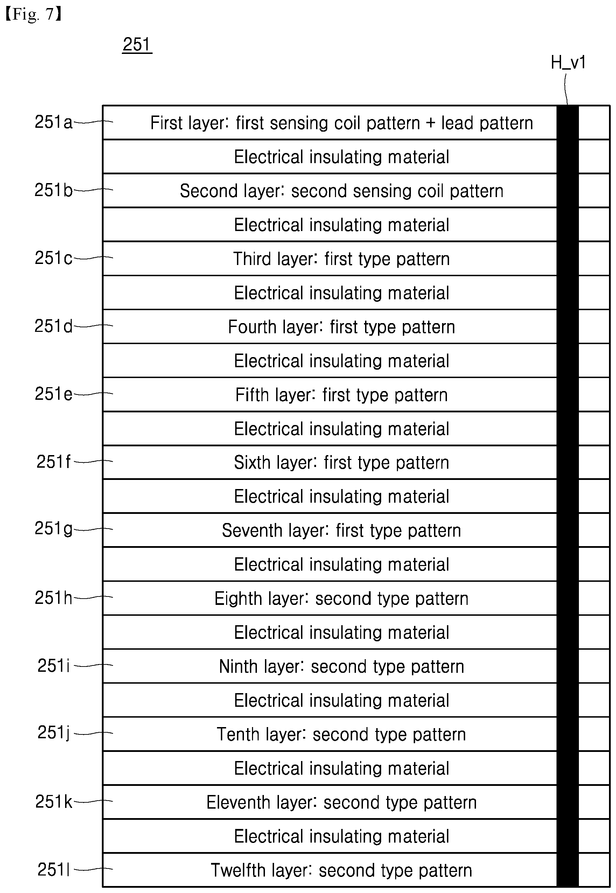

Details regarding the working coil pattern 2512, sensing coil pattern 2514, and temperature sensor 2515 constituting the first to third coil circuit board modules 251, 252, 253 will be described below with reference to FIG. 7 and the drawings after it.

Meanwhile, the cooktop 20 of the cooking appliance 1 according to an embodiment of the present invention may further include a substrate supporter 26.

The substrate supporter 26, in which internal components disposed in the inside of the cooktop 20 are installed, serves to support them.

More specifically, as shown in FIGS. 4 and 5, the first to third coil circuit board modules 251, 252, 253 and the ferrite core module 27 may be seated in the upper side of the substrate supporter 26. Therefore, the substrate supporter 26 functions as a coil base on which a conventional working coil and a ferrite core are mounted.

Additionally, as shown in FIGS. 4 and 5, several electronic components 28 constituting the cooktop 20 may be installed in the lower side of the substrate supporter 26.

These electronic components 28 may include a main circuit board module 281, an SMPS circuit board module (switching mode power supply, 282), an inverter circuit board module 283, a resonance circuit board module 284, an EMI filter module 285, a blower fan module 286, a light source module 23, and the like.

These electric components 28 may be disposed in the space formed between the lower surface 24a of the bottom case 24 and the substrate supporter 26 as the bottom side of the substrate supporter 26.

For example, in order to effectively accommodate these electronic components 28, the substrate supporter 26 may have an inverted box shape configured so that the bottom surface facing the bottom case 24 is entirely open.

Therefore, the main circuit board module 281, the SMPS circuit board module (switching mode power supply, 282), the inverter circuit board module 283, the resonant circuit board module 284, the EMI filter module 28, the blower fan module 286, and the light source module 23 may be assembled to the substrate supporter 26 in a way that is stacked in an accommodation space formed in the inside of the substrate supporter 26.

In this way, as the first to third coil circuit board modules 251, 252, 253 are seated on the top surface 21a of the board supporter 26 and the electronic component 28 is seated on the bottom surface of the board supporter 26 as the interior of the board supporter 26, the wiring structure between the electronic components 28 and the wiring structure between the electronic component 28 and the first to third coil circuit board modules 251, 252, 253 can be significantly simplified and streamlined.

In particular, in the case of the conventional cooktop 20, almost all components need to be disassembled in the reverse order of the assembly process in order to repair the inverter circuit board module that causes major failures and defects.

In contrast, the cooktop 20 of the cooking appliance 1 according to one embodiment of the present invention is configured to easily access the electronic component 28 such as the inverter circuit board module 283 when only the bottom case 24 is disassembled in a state where the bottom case 24 is turned upside down, which thus leads to the effect of being able to easily repair or replace the electronic component 28 in which a defect has occurred.

In this regard, a process of assembling the cooktop 20 of the cooking appliance 1 according to an embodiment of the present invention will be briefly described.

As shown in FIG. 5, first, a plurality of ferrite core modules 27 may be assembled on the top surface 261 of the substrate supporter 26.

The ferrite core module 27 according to an embodiment of the present invention may be constructed in a manner in which a plurality of ferrite cores are combined to be modularized. This takes into account the fact that crack defects or magnetic field losses may occur when a ferrite core constructed in a single body and formed to have a relatively large volume is applied.

By modularizing a plurality of ferrite cores to form the ferrite core module 27 and installing it on the substrate supporter 26, it is possible to effectively reduce the number of parts and simplify the assembly process.

For example, the ferrite core module 27 may be manufactured in an insert injection manner. In this way, by manufacturing the ferrite core module 27 in an insert injection manner, it is possible to omit a separate jig for fixing the single ferrite core part when assembling the cooktop 20 as in the prior art.

Additionally, by modularizing the ferrite core in this way to form a number of ferrite core modules 27, there is an advantage in that even if some ferrite cores are damaged, they can be repaired by simple replacement.

Meanwhile, when having completed the arrangement of a plurality of ferrite core modules 27 on the top surface 261 of the substrate supporter 26, the first to third coil circuit board modules 251, 252, 253 may be seated on the upper side of the ferrite core module 27.

Next, in a state where the first to third coil circuit board modules 251, 252, 253 are seated, the substrate supporter 26 may be turned upside down, and the assembly of the electronic component 28 may proceed.

As described above, several electric components 28 may be installed and assembled on the bottom surface of the substrate supporter 26. At this time, these electric components 28 may be installed and assembled in an upside-down state on the board supporter 26.

Meanwhile, the cooktop 20 of the cooking appliance 1 according to an embodiment of the present invention may further include a thermal insulating material 291 disposed in the upper side of the first to third coil circuit board modules 251, 252, 253 and between the first to third coil circuit board modules 251, 252, 253 and the top plate 21.

The thermal insulating material 291 serves to minimize the transfer of heat generated from the container disposed on the top surface 21a of the top plate 21 and heated by the working coil pattern 2512 to the working coil pattern 2512.

In order to perform such an insulation function, the thermal insulating material 291 may be disposed in the form of a pad covering the first to third coil circuit board modules 251, 252, 253 as a whole.

Meanwhile, in the present embodiment, the thermal insulating material 291 may be divided into a plurality of pads.

In more detail, each of the thermal insulating materials 291 may be divided into a plurality of pads to have a width in the left and right directions corresponding to the width of the burner 2511 in the left and right directions formed in the first to third coil circuit board modules 251, 252, 253.

In this way, since the thermal insulating material 291 is disposed in a state of being divided into a plurality of pieces, a predetermined gap can be formed between adjacent thermal insulating materials 291, and visible light generated from the above-described light source module 23 can be irradiated through the predetermined gap to the bottom surface of the top plate 21, so that the above-described indication line L can be displayed on the top plate 21.

Meanwhile, the thermal insulating material 291 can additionally perform the role of electrically insulating between the working coil pattern 2512 or sensing coil pattern 2514 formed on the first to third coil circuit board modules 251, 252, 253 and the top plate 21.

In this case, the thermal insulating material 291 may be made of a material that simultaneously possesses both thermal insulating performance and electrical insulating performance.

Meanwhile, although not shown, in order to further supplement the electrical insulating performance of the thermal insulating material 291, an electrical insulating material may be added between the thermal insulating material 291 and the top plate 21 in the upper side of the thermal insulating material 291. For example, the electrical insulating material may be a mica sheet having a thickness less than that of the thermal insulating material 291 in the up and down directions.

### [Detailed configuration of coil circuit board module]

Hereinafter, a detailed configuration of the coil circuit board module 251, 252, 253 of the cooktop 20 constituting the cooking appliance 1 according to an embodiment of the present invention will be described with reference to FIGS. 7 to 16.

As described above, an embodiment of the present invention may be constructed by including the first to third coil circuit board modules 251, 252, 253.

In this case, the first to third coil circuit board modules 251, 252, 253 may be configured substantially the same except for the number of working coil patterns 2512 and the number of sensing coil patterns 2514 constituting the burner 2511.

Therefore, the following description will be made based on the first coil circuit board module 251, and unless otherwise stated, the contents described below can be applied almost identically to the second coil circuit board module 252 and the third coil circuit board module 253.

First, as described above, the first coil circuit board module 251 may be formed in a manner in which the working coil pattern 2512 forming a plurality of burners 2511 is stacked in multiple layers.

As illustrated in FIG. 7, for example, the first coil circuit board module 251 may be constructed by including working coil patterns 2512 arranged in a ten-layer structure, sensing coil patterns 2514 arranged in a two-layer structure, and an electrical insulating material disposed between each working coil pattern 2512 and each sensing coil pattern 2514 to electrically insulate them from each other.

Therefore, based on the working coil pattern 2512 and the sensing coil pattern 2514, the first coil circuit board module 251 can have a layered structure with a total of 12 layers from the first layer 251a forming the uppermost layer to the twelfth layer 251l forming the lowermost layer based on the up and down directions.

In this case, the first sensing coil pattern 2514a constituting the sensing coil pattern 2514 may be disposed on the first layer 251a of the first coil circuit board module 251 having the 12-layer structure.

Additionally, a lead pattern 2513 may be disposed on the first layer 251a electrically connecting the first sensing coil pattern 2514a to a signal processing unit 2518 to be described later, or electrically connecting the working coil pattern 2512 disposed on the third to twelfth layers 251c, 251d, 251e, 251f, 251g, 251h, 251i, 251j, 251k, 251l to a substrate terminal 2516.

Here, the lead pattern 2513 may be divided into a first lead pattern 2513a electrically connecting the working coil pattern 2512 disposed in the third to twelfth layers 251c, 251d, 251e, 251f, 251g, 251h, 251i, 251j, 251k, 251l to the substrate terminal 2516, and a second lead pattern 2513b electrically connecting the first sensing coil pattern 2514a to the signal processing unit 2518.

Additionally, although not shown in FIG. 7, the first layer 251a may further include the temperature sensor 2515 for detecting the temperature of the top plate 21, the substrate terminal 2516 to which high-frequency power is supplied from the inverter circuit board module 283, the signal processing unit 2518 for processing the output signal of the sensing coil pattern 2514 and the output signal of the temperature sensor 2515, and a third lead pattern 2513c electrically connecting the temperature sensor 2515 and the signal processing unit 2518.

Meanwhile, a second sensing coil pattern 2514b constituting the sensing coil pattern 2514 and a second lead pattern 2513b electrically connecting the second sensing coil pattern 2514b to the signal processing unit 2518 may be disposed on the second layer 251b of the first coil circuit board module 251.

That is, in order to increase the efficiency and effectiveness of detection for the container, the sensing coil pattern 2514 may be disposed in a manner in which it is divided into the first sensing coil pattern 2514a disposed in the first layer 251a and the second sensing coil pattern 2514b disposed in the second layer 251b.

In this case, as described later, the first sensing coil pattern 2514a and the second sensing coil pattern 2514b may be configured to be connected in series through a sensing coil via hole H_v2 extending through the first layer 251a and the second layer 251b, so that they can function as one sensing coil pattern 2514.

Meanwhile, the second sensing coil pattern 2514b constituting the sensing coil pattern 2514 may be disposed on the second layer 251b of the first coil circuit board module 251.

As described below, the working coil pattern 2512 provided on the cooktop 20 of the cooking appliance 1 according to one embodiment of the present invention may include a first type pattern 2512a and a second type pattern 2512b in which the progress direction or winding direction of individual pattern strands 2512a-1, 2512b-1 are formed in opposite directions so that a magnetic field can be applied evenly to the container.

As illustrated in FIG. 7, for example, the working coil pattern 2512 may be formed in the third to seventh layers 251c, 251d, 251e, 251f, 251g in such a manner that the first type pattern 2512a configured such that the progress direction or winding direction of the individual pattern strands 2512a-1 becomes the first direction may be disposed.

Additionally, for example, the working coil pattern 2512 may be formed in the eighth to twelfth layers 251h, 251i, 251j, 251k, 251l in such a manner that the second type pattern 2512b configured such that the progress direction or winding direction of the individual pattern strand 2512b-1 is in the second direction may be disposed.

At this time, as illustrated, the first lead pattern 2513a formed on the first layer 251a, the first type pattern 2512a disposed on the third to seventh layers 251c, 251d, 251e, 251f, 251g, and the second type pattern 2512b disposed on the eighth to twelfth layers 251h, 251i, 251j, 251k, 251l may be configured to be collectively connected through a working coil via hole H_v1 continuously formed to be penetrated from the first layer 251a to the twelfth layer 251l.

Therefore, a plurality of first type patterns 2512a and a plurality of second type patterns 2512b forming a specific burner of a plurality of burners as described below, may be collectively connected in series through the working coil via hole H_v1.

Meanwhile, although not shown, an electrical insulating material may be additionally formed in the upper side of the first layer 251a and in the lower side of the twelfth layer 251l.

Meanwhile, the layered structure of the first coil circuit board module 251 illustrated in FIG. 7 is merely illustrative.

That is, the layered structure may be modified so that the second sensing coil pattern 2514b is disposed on a layer other than the second layer 251b, such as the sixth layer 251f or seventh layer 251g which is an intermediate layer, or on the twelfth layer 251l which is the lowermost layer.

Additionally, FIG. 7 illustrates that the first type pattern 2512a is disposed continuously from the third layer 251c to the seventh layer 251g, and the second type pattern 2512b is disposed continuously from the eighth layer 251h to the twelfth layer 251l; however, alternatively, this may be modified such that the first type pattern 2512a and the second type pattern 2512b are alternately and repeatedly disposed.

It is regarded that such a modification naturally falls within the scope of the present invention. However, the present invention will be described below based on, but is not limited to, the layered structure of the first coil circuit board module 251 as illustrated in FIG. 7.

In the first coil circuit board module 251 with such a multi-layer layered structure, the twelfth layer 251l becoming the lowermost layer may be formed by masking and printing the shape of the working coil pattern 2512 becoming the second type pattern 2512b on the copper thin film, forming a pattern through the removal of the unnecessary portion through etching, and coating an electrical insulating material on the formed pattern.

The thickness of the copper thin film applied in this embodiment may be in the range of 0.13 mm to 0.15 mm, and preferably 0.14 mm.

Therefore, if neither additional surface treatment nor the like is performed during the stacking process, the thickness of the individual pattern in the up and down directions, which is formed through the copper thin film, can be 0.13 mm to 0.15 mm.

Additionally, the thickness of the electrical insulating material applied in this embodiment may be in the range of 0.09 mm to 0.11 mm, and preferably 0.1 mm.

After the twelfth layer 251l becoming the lowermost layer has been formed in this way, the same process as the formation method of the twelfth layer 251l may be repeated thereon to form the multi-layer layered structure as shown in FIG. 7.

Therefore, when the formation of the first coil circuit board module 251 has been completed as a total of 12 layers, the thickness of the first coil circuit board module 251 in the up and down directions can be in the range of 2.7 mm to 3.3 mm, and preferably 3 mm.

To a method for manufacturing a multilayer printed circuit board for forming the first coil circuit board module 251 having such a shape and structure, means already known in the art is applicable, and therefore, a description of the specific manufacturing method will be omitted below.

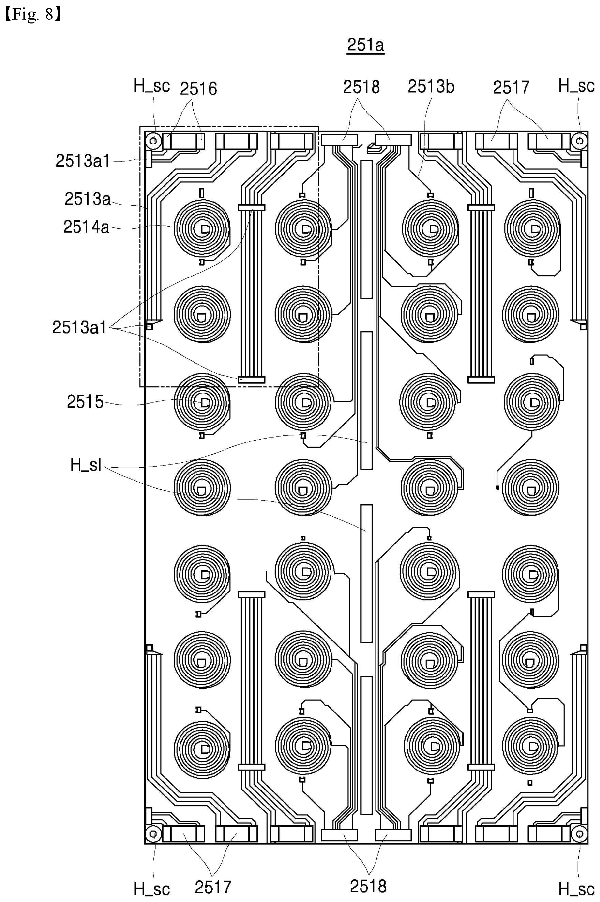

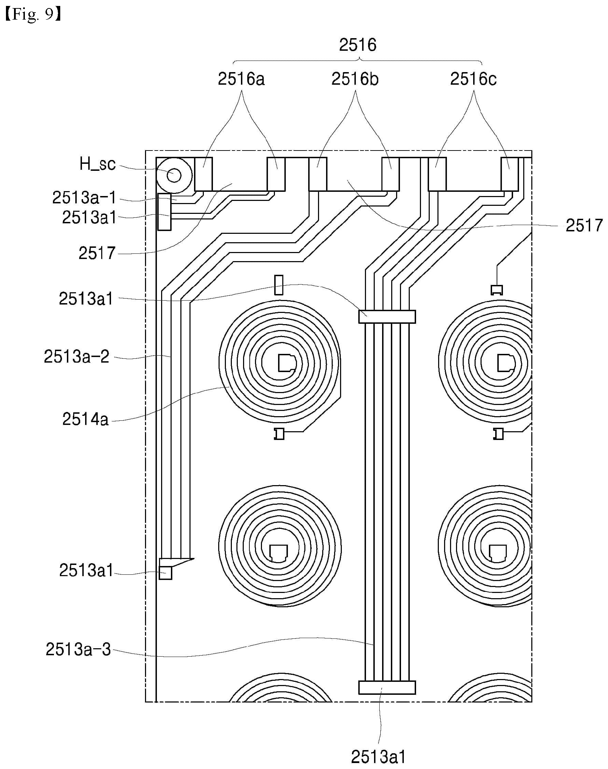

FIGS. 8 and 9 illustrate the planar structures of the first layer 251a and the second layer 251b of the first coil circuit board module 251 having a multi-layer structure, respectively.

In this embodiment, the first coil circuit board module 251 may be configured to have a rectangular shape in which the width in the front and rear directions is greater than the width in the left and right directions based on the state in which it is disposed in the cooktop 20.

In response to this, the first layer 251a becoming the uppermost layer, and the second layer 251b becoming the second-uppermost layer may be configured to have a rectangular shape in which the width in the front and rear directions is greater than the width in the left and right directions.

As described above, a first sensing coil pattern 2514a forming the first layer of the sensing coil patterns 2514 arranged in two layers may be disposed in the first layer 251a, and a second sensing coil pattern 2514b forming the second layer of the sensing coil patterns 2514 arranged in two layers may be disposed in the second layer 251b.

In this case, as shown, the first sensing coil pattern 2514a and the second sensing coil pattern 2514b may be wound in a different shape from the working coil pattern 2512.

That is, the first sensing coil pattern 2514a and the second sensing coil pattern 2514b may be wound in a circular spiral shape. For example, the first sensing coil pattern 2514a and the second sensing coil pattern 2514b may have a number of turns set to 18, and the outer diameter may be in the range of 32 mm to 34 mm, preferably in the range of 33 mm. Additionally, the width of the individual pattern strands constituting the first sensing coil pattern 2514a and the second sensing coil pattern 2514b may be in the range of 0.27 mm to 0.33 mm, preferably 0.3 mm.

As described below, the working coil pattern 2512 is wound in a square spiral shape.

Additionally, the first sensing coil pattern 2514a and the second sensing coil pattern 2514b are disposed so as to allow a region to partially overlap the working coil pattern 2512 based on the up and down directions.

Therefore, due to this overlapping region, there is a possibility that malfunction or detection error of the first sensing coil pattern 2514a and the second sensing coil pattern 2514b may occur.

In this way, by winding the first sensing coil pattern 2514a and the second sensing coil pattern 2514b in the circular spiral shape, interference with the working coil pattern 2512 wound in the square spiral shape can be minimized, and the occurrence possibility of malfunction and detection error of the first sensing coil pattern 2514a and the second sensing coil pattern 2514b can be minimized.

Meanwhile, the first sensing coil pattern 2514a and the second sensing coil pattern 2514b may be wound so that the starting point is not formed in the center of the circular spiral. That is, a central inner region in which neither the first sensing coil pattern 2514a nor the second sensing coil pattern 2514b is formed may be formed in the center of the circular spiral shape.

In this central inner region of the first sensing coil pattern 2514a, as described below, a temperature sensor 2515 may be mounted.

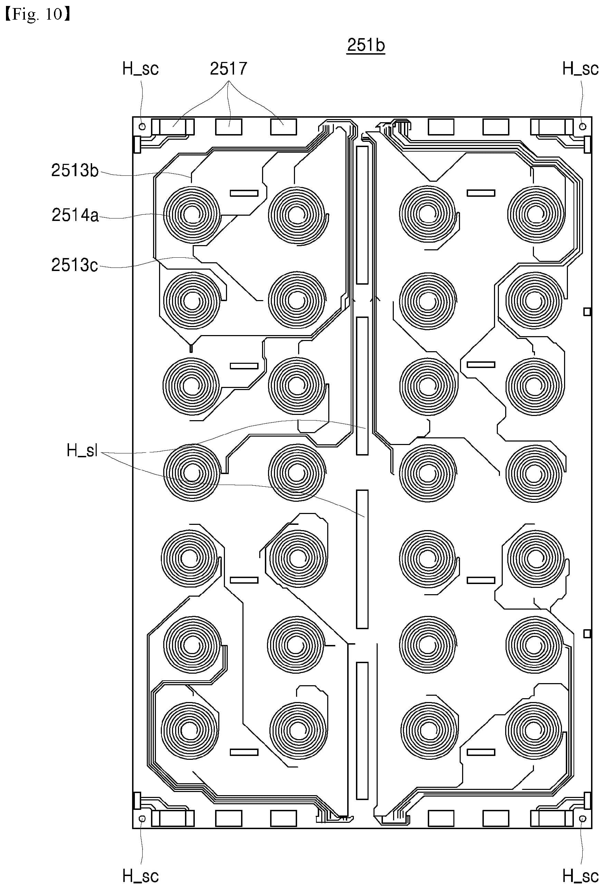

The specific configuration regarding placement of the temperature sensor 2515 will be described later with reference to FIG. 10.

In this embodiment, the first sensing coil pattern 2514a and the second sensing coil pattern 2514b may be provided in plural.

More specifically, a plurality of first sensing coil patterns 2514a and a plurality of second sensing coil patterns 2514b may include some patterns disposed entirely within a specific burner, and patterns disposed to span a pair of adjacent burners 2511.

For example, when the first coil circuit board module 251 includes a total of eight fire holes 2511 in the embodiment as illustrated in FIG. 8, a plurality of first sensing coil patterns 2514a and a plurality of second sensing coil patterns 2514b may be provided in a total of 28 patterns, respectively.

However, this is merely illustrative, and the number of first sensing coil patterns 2514a may be adjusted to be provided differently depending on the size of the individual burner 2511 and the size of the first coil circuit board module 251. The present invention will be described below based on, but is not limited to, an embodiment in which 28 first sensing coil patterns 2514a and second sensing coil patterns 2514b are provided on the first coil circuit board module 251.

The first sensing coil patterns 2514a disposed at different locations may be configured to have substantially the same number of turns, and similarly, the second sensing coil patterns 2514b disposed at different locations may be configured to have the same number of turns.

The sensing coil via hole H_v2 may be formed at the starting point or the ending point of the first sensing coil pattern 2514a, and the sensing coil via hole H_v2 may be connected to the ending point or the starting point of the second sensing coil pattern 2514b. Through this, the first sensing coil pattern 2514a and the second sensing coil pattern 2514b may be connected in series to each other to form one sensing coil pattern 2514.

A starting point or an ending point that is not connected to the sensing coil via hole H_v2 may be electrically connected to the signal processing unit 2518 provided in the first layer 251a through the second lead pattern 2513b formed in the first layer 251a or the second layer 251b, as illustrated in FIGS. 8 and 9.

Meanwhile, the temperature sensor 2515 to be described later may be electrically connected to the signal processing unit 2518 through the third lead pattern 2513c. As shown in FIG. 9, the third lead pattern 2513c may be formed on the second layer 251b.

In the case where a total of 28 sensing coil patterns 2514 are provided as in the embodiment illustrated in FIG. 8, a total of four signal processing units 2518 may be provided, and a pair of signal processing units 2518 may be formed adjacent to each other at the center of the rear end edge of the first layer 251a, and the other pair of signal processing units 2518 may be disposed adjacent to each other at the center of the front end edge of the first layer 251a.

For example, based on the embodiment illustrated in FIG. 8, among a pair of signal processing units 2518 disposed at the front end edge of the first layer 251a, a left signal processing unit 2518 may be assigned with a group of six sensing coil patterns 2514 among the plurality of sensing coil patterns 2514 disposed to be divided left and right, which are arranged on the left side and rearward from the front end edge of the first layer 251a and temperature sensors 2515 respectively disposed in them, while a right signal processing unit 2518 may be assigned with a group of six sensing coil patterns 2514 among the plurality of sensing coil patterns 2514, which are arranged on the right side and rearward from the front end edge of the first layer 251a and temperature sensors 2515 respectively disposed in them.

To a pair of signal processing units 2518 disposed at the rear end edge of the first layer 251a, a group of sensing coil patterns 2514 and temperature sensors 2515 may be assigned in the same manner.

In this way, by arranging the two pairs of signal processing units 2518 at positions maximally spaced apart along the front and rear directions, the structure of the second lead pattern 2513b connecting the individual sensing coil pattern 2514 to the signal processing unit 2518 and the third lead pattern 2513c connecting the individual temperature sensor 2515 to the signal processing unit 2518 can be effectively simplified, and their lengths can be effectively minimized.

Meanwhile, in the first layer 251a, as described later, the first lead pattern 2513a may be formed for transmitting high-frequency power to each of the first type pattern 2512a and the second type pattern 2512b constituting the working coil pattern 2512.

As illustrated, each of the first lead patterns 2513a may be configured to be divided into multiple pattern strands.

Therefore, since the first lead pattern 2513a is formed to be divided into multiple pattern strands, it is possible to minimize the power loss that may occur due to the skin effect when high-frequency power is applied.

Meanwhile, considering the efficiency of power supply, a plurality of pattern strands may be concentrated at one end and the other end of the first lead pattern 2513a to form a common lead terminal 2513a1.

The common lead terminal 2513a1 formed at one end of the first lead pattern 2513a may be connected to a substrate terminal 2516 formed at each of the front end edge and the rear end edge of the first layer 251a.

Meanwhile, the first lead pattern 2513a may extend toward the common lead terminal 2513a1 formed at the other end and disposed in the inside of the first layer 251a from one end.

Meanwhile, in this embodiment, a pair of working coil patterns 2512 disposed adjacent to each other may be configured to be supplied with high-frequency power through three substrate terminals 2516 and three first lead patterns 2513a.

In other words, if it is configured so that the high-frequency power is supplied through a pair of substrate terminals 2516 and a pair of first lead patterns 2513a to each working coil pattern 2512, two pairs of substrate terminals 2516 and two pairs of first lead patterns 2513a must be assigned to one pair of working coil patterns 2512.

The present invention is configured so that high-frequency power is supplied to a pair of working coil patterns 2512 through three substrate terminals 2516 and three first lead patterns 2513a disposed adjacent to each other, and thus, it is possible to minimize the number of substrate terminals 2516 and the number of first lead patterns 2513a, thereby simplifying the circuit configuration.

This will be explained in more detail with reference to FIG. 9.

FIG. 9 is a partial enlarged view of FIG. 8, showing the detailed configuration of a substrate terminal 2516 and a first lead pattern 2513a for supplying power to a pair of working coil patterns 2512 disposed adjacent to the left rear side based on the state shown in FIG. 8.

Based on the shown state, the leftmost substrate terminal 2516 will be referred to as a first substrate terminal 2516a; the middle substrate terminal 2516 will be referred to as a second substrate terminal 2516b; and the rightmost substrate terminal 2516 will be referred to as the third substrate terminal 2516c.

Additionally, the first lead pattern 2513a connected to the first substrate terminal 2516a will be referred to as the first-first lead pattern 2513a-1; the first lead pattern 2513a connected to the second substrate terminal 2516b will be referred to as the first-second lead pattern 2513a-2; and the first lead pattern 2513a connected to the third substrate terminal 2516c will be referred to as the first-third lead pattern 2513a-3.

As illustrated, the first substrate terminal 2516a may be electrically connected through the first-first lead pattern 2513a-1 to the external common terminal of the working coil pattern 2512 among the pair of working coil patterns 2512, which is disposed further rearward.

Hereinafter, the external common terminal of the working coil pattern 2512 will be referred to as the second common terminal 2512a-3, 2512b-3, and the internal common terminal of the working coil pattern 2512 will be referred to as the first common terminal 2512a-2, 2512b-2.

As described below, the first common terminal 2512a-2, 2512b-2 may include the first common terminal 2512a-2 of the first type pattern 2512a and the first common terminal 2512b-2 of the second type pattern 2512b, and the first common terminal 2512a-2 of the first type pattern 2512a and the first common terminal 2512b-2 of the second type pattern 2512b may be connected in series through the working coil via hole H_v1. As described below, the first common terminal 2512a-2 of the first type pattern 2512a and the first common terminal 2512b-2 of the second type pattern 2512b may be formed at positions where they overlap each other in the vertical direction.

Similarly, the second common terminal 2512a-3, 2512b-3 may include the second common terminal 2512a-3 of the first type pattern 2512a and the second common terminal 2512b-3 of the second type pattern 2512b, and the second common terminal 2512a-3 of the first type pattern 2512a and the second common terminal 2512b-3 of the second type pattern 2512b may be connected in series through the working coil via hole H_v1. As described below, the second common terminal 2512a-3 of the first type pattern 2512a and the second common terminal 2512b-3 of the second type pattern 2512b may be formed at positions where they overlap each other in the vertical direction.

In this case, the common lead terminal 2513a1 formed at the other end of the first-first lead pattern 2513a-1 may be formed at a position where it vertically overlaps the second common terminal 2512a-3, 2512b-3 of the working coil pattern 2512 disposed at the rear, and may be connected in series with the second common terminal 2512a-3, 2512b-3 of the working coil pattern 2512 through the working coil via hole H_v1.

Meanwhile, as shown, the second substrate terminal 2516b may be electrically connected through the first-second lead pattern 2513a-2 to the second common terminal 2512a-3, 2512b-3 of the working coil pattern 2512 among the pair of working coil patterns 2512, which is disposed further frontward.

In this case, the common lead terminal 2513a1 formed at the other end of the first-second lead pattern 2513a-2 may be formed at a position where it vertically overlaps the second common terminal 2512a-3, 2512b-3 of the working coil pattern 2512 disposed at the front, and may be connected in series with the second common terminal 2512a-3, 2512b-3 of the working coil pattern 2512 through the working coil via hole H_v1.

Additionally, the third substrate terminal 2516c may be electrically connected through the first-third lead pattern 2513a-3 to the first common terminals 2512a-2, 2512b-2 of a pair of working coil patterns 2512 simultaneously.

That is, as shown, the first-third lead pattern 2513a-3 may have a common lead terminal 2513a1 formed at the other end, and may be additionally provided with a common lead terminal 2513a1 at an intermediate position between one end and the other end.

The common lead terminal 2513a1 formed at the other end of the first-third lead pattern 2513a-3 may be electrically connected through the working coil via hole H_v1 to the first common terminal 2512a-2, 2512b-2 of the working coil pattern 2512 among a pair of working coil patterns 2512, which is disposed at the front.

Additionally, the common lead terminal 2513a1 formed at the intermediate position of the first-third lead pattern 2513a-3 may be electrically connected through the working coil via hole H_v1 to the first common terminal 2512a-2, 2512b-2 of the working coil pattern 2512 among a pair of working coil patterns 2512, which is disposed at the rear.

That is, the first-third lead pattern 2513a-3 may be configured to act as a common lead pattern capable of simultaneously supplying power to the pair of working coil patterns 2512.

Therefore, the driving of the pair of working coil patterns 2512 can be controlled in a manner of supplying power to the first substrate terminal 2516a and the third substrate terminal 2516c and cutting off power to the second substrate terminal 2516b when driving only the rear working coil pattern 2512, and in a manner of supplying power to the second substrate terminal 2516b and the third substrate terminal 2516c and cutting off power to the first substrate terminal 2516a when driving only the front working coil pattern 2512, and in a manner of supplying power to all of the first to third substrate terminals 2516c when driving the pair of working coil patterns 2512 simultaneously.

Meanwhile, based on the state shown in FIGS. 8 and 9, a plurality of edge notches 2517 may be formed at the front end edge and rear end edge of the first layer 251a.

The edge notch 2517 serves to provide a coupling space into which a connector (not shown) supplying high-frequency power to the substrate terminal 2516 can be fitted.

As shown, the individual substrate terminal 2516 may be disposed in the form of being divided with the edge notch 2517 interposed therebetween so that the connector can be connected to the substrate terminal 2516 as soon as it is fitted into the edge notch 2517.

To reduce manufacturing costs through the common use of components, connectors having the same shape and structure may be coupled to the respective edge notches 2517. To this end, the respective edge notches 2517 may be formed to have the same shape and size.

Meanwhile, as shown in FIG. 10, the edge notch 2517 may be formed across from the first layer 251a of the first coil circuit board module 251 through the second layer 251b to the twelfth layer 251l.

Additionally, in the first coil circuit board module 251, a screw hole H_sc may be formed to be penetrated. In the same manner as the edge notch 2517, the screw hole H_sc may be formed to be penetrated from the first layer 251a to the twelfth layer 251l.

A fastening means such as a screw bolt not shown can pass through the screw hole H_sc to be coupled to the above-described substrate supporter 26, and, through this, the first coil circuit board module 251 can be firmly fastened to the above-described substrate supporter 26.

For example, the screw holes H_sc may be disposed in the four corner sides so as not to cause interference with the patterns constituting the first coil circuit board module 251.

Additionally, in the first layer 251a around the screw hole H_sc, a ground terminal may be formed for grounding the first coil circuit board module 251.

Meanwhile, the first coil circuit board module 251 may be provided with the light-transmitting slit hole H_sl formed to be penetrated from the first layer 251a to the twelfth layer 251l.

The above-described light source module 23 may be disposed under the light-transmitting slit hole H_sl, and visible light generated from the light source module 23 can pass through the light-transmitting slit hole H_sl to be irradiated to the bottom surface of the top plate 21. Through this, the indication line L extending linearly can be formed on the top plate 21.

In order to implement the indication line L extending linearly, the light-transmitting slit hole H_sl may be linearly extended corresponding to the shape of the indication line L.

However, as shown in FIG. 8, in order to prevent the rigidity of the first coil circuit board module 251 from rapidly decreasing, the light-transmitting slit hole H_sl may be formed to be divided into multiple pieces, and the divided light-transmitting slit holes H_sl may be arranged linearly.

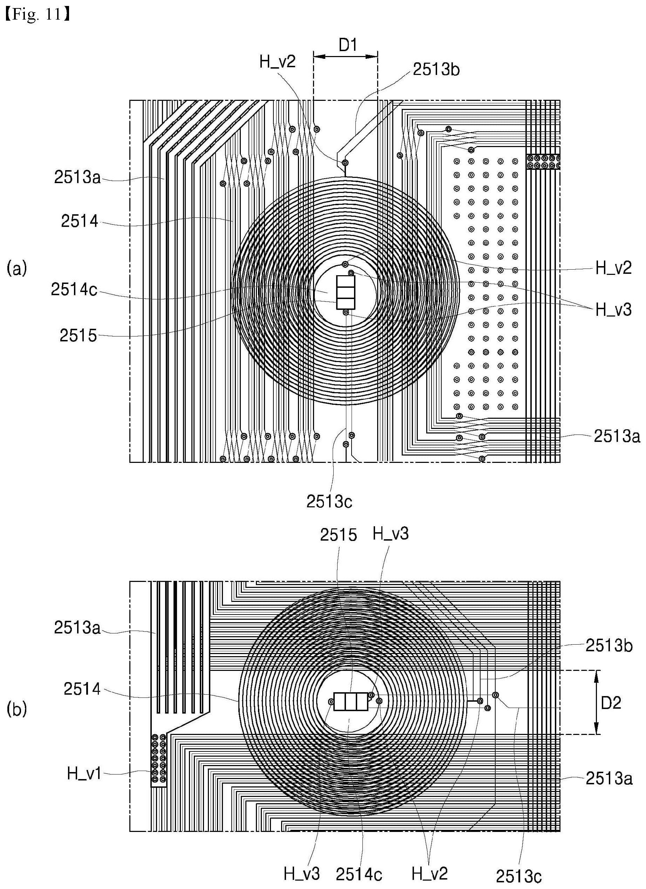

Hereinafter, with reference to FIG. 11, the relative layout position of the sensing coil pattern 2514 and the layout and arrangement structure of the temperature sensor 2515 will be described.

FIG. 11 is an enlarged partial view of a plan view of the shown first coil circuit board module 251 as viewed from above, in which the sensing coil pattern 2514 and the working coil pattern 2512 are shown together for the purpose of explaining and understanding the relative positions. However, in fact, the sensing coil pattern 2514 and the working coil pattern 2512 in this embodiment are disposed in different layers, so the sensing coil pattern 2514 and the working coil pattern 2512 cannot be observed together.

As described above, the individual sensing coil pattern 2514 wound in a circular spiral shape may be disposed so that its region partially overlaps the working coil pattern 2512 wound in a square spiral shape based on the up and down directions.

In this case, some of the plurality of sensing coil patterns 2514 may be disposed as a whole within a single burner 2511 formed through the working coil pattern 2512, and other ones of the plurality of sensing coil patterns 2514 may be disposed to span a pair of adjacent burners 2511.

FIG. 11(a) shows a state in which a sensing coil pattern 2514 is disposed as a whole within a working coil pattern 2512, and FIG. 11(b) shows a state in which a sensing coil pattern 2514 is disposed to span between a pair of adjacent working coil patterns 2512.

First, referring to FIG. 11(a), the working coil pattern 2512 formed by stacking a plurality of first type patterns 2512a and a plurality of second type patterns 2512b may be wound a plurality of times to have a square spiral shape.

For example, the first type pattern 2512a and the second type pattern 2512b constituting the working coil pattern 2512 may be wound a total of 9 times. That is, it may be wound so that the number of turns is 9 times.

Additionally, for example, six to five pattern strands 2512a-1, 2512b-1 may be bundled together to form one turn.

In this case, as shown, the distances between the respective turns forming the first type pattern 2512a and the second type pattern 2512b may be maintained approximately constant, but the horizontal direction interval between the third turn and the fourth turn may be formed to be much greater.

Through the horizontal direction distance formed relatively greater in this way, an internal gap D1 can be formed.

Additionally, as shown in FIG. 11(b), an external gap D2 becoming a distance in the front and rear directions similar to the internal gap D1 may be formed between a pair of working coil patterns 2512 disposed adjacently along the front and rear directions based on the state in which the first coil circuit board module 251 is disposed.

The internal gap D1 and the external gap D2 may be formed to have the same size as each other, and, for example, the internal gap D1 and the external gap D2 may be in a range of 3.8 mm to 4.2 mm, and preferably, 4 mm.

As illustrated, the sensing coil pattern 2514 may be disposed so that the center point is located in the internal gap D1 and the external gap D2.

Preferably, in the case where the center point of the sensing coil pattern 2514 is located at the internal gap D1 as in FIG. 11(a), the center point of the sensing coil pattern 2514 may roughly coincide with the middle position between the third turn and the fourth turn.

Additionally, preferably, in the case where the center point of the sensing coil pattern 2514 is located at the external gap D2 as in FIG. 11(b), the center point of the sensing coil pattern 2514 may roughly coincide with the middle position between a pair of adjacently disposed working coil patterns 2512.

Additionally, as described above, each of the first sensing coil pattern 2514a and the second sensing coil pattern 2514b has a region in which no pattern is formed, and through which the central inner region 2514c can be formed in the inner side of the sensing coil pattern 2514.

In this central inner region 2514c of the first sensing coil pattern 2514a, as described below, the temperature sensor 2515 may be mounted. In order to distinguish it from the central inner region formed in the inner side of the working coil pattern 2512 described later, the central inner region of the first sensing coil pattern 2514a will be hereinafter referred to as the first central inner region 2514c.

As illustrated, the first central inner region 2514c of the sensing coil pattern 2514 may have a disk shape, and the diameter of the inner region of the disk shape may be formed to be equal to or slightly smaller than the size of the internal gap D1 and the external gap D2.

In this way, the internal gap D1 and external gap D2 of the working coil pattern 2512 and the first central inner region 2514c of the sensing coil pattern 2514 can provide a space in which the temperature sensor 2515 can be mounted.

As illustrated, the temperature sensor 2515 for sensing the temperature of the top plate 21 may be mounted in the first central inner region 2514c of each sensing coil pattern 2514 in the first layer 251a. In this case, the size of the internal gap D1 and the external gap D2 and the diameter of the sensing coil pattern 2514 may be formed to be greater than the size of the temperature sensor 2515, i.e., the longitudinal direction width.

Through this, when viewed from the top plate 21, the individual temperature sensor 2515 can be disposed in the first layer 251a so as to belong to a position surrounded by each sensing coil pattern 2514, that is, the first central inner region 2514c as a region where neither the working coil pattern 2512 nor the sensing coil pattern 2514 is formed.

Additionally, in order to prevent interference with the sensing coil pattern 2514, the temperature sensor 2515 may be disposed, as shown, in a position where the overlap does not occur with respect to the sensing coil pattern 2514 in the up and down directions in the inside of the first central inner region 2514c.

Meanwhile, for example, to the temperature sensor 2515, a surface mounted device (SMD) type thermistor in the form of a chip may be applied which is relatively small, easy to mount on the first layer 251a, and has an excellent sensing capability.

However, in the case where this SMD type thermistor is mounted on the first coil circuit board module 251 as the temperature sensor 2515, there is a very high possibility that it will be affected by the emission of heat generated from the working coil pattern 2512.

In order to minimize the influence by the emission of heat of this working coil pattern 2512, it is necessary to be disposed as far away as possible from the working coil pattern 2512 based on the horizontal direction.

As a position where the influence of this emission of heat can be minimized, a region where the first central inner region 2514c of the sensing coil pattern 2514 and the internal gap D1 overlap, and a region where the first central inner region 2514c of the sensing coil pattern 2514 and the external gap D2 overlap may be selected.

Although FIG. 11 illustrates that the temperature sensor 2515 is disposed at a position where the center point of the temperature sensor 2515 and the center point of the first central inner region 2514c of the sensing coil pattern 2514 roughly coincide, this is merely illustrative, and the influence by the emission of heat of the working coil pattern 2512 can be minimized simply by disposing the temperature sensor 2515 at any position in the region where the first central inner region 2514c of the sensing coil pattern 2514 and the internal gap D1 overlap, and in the region where the first central inner region 2514c of the sensing coil pattern 2514 and the external gap D2 overlap.

Additionally, by configuring such that the temperature sensor 2515 is disposed in a region where the first central inner region 2514c of the sensing coil pattern 2514 and the internal gap D1 overlap, and a region where the first central inner region 2514c of the sensing coil pattern 2514 and the external gap D2 overlap, it is possible to effectively secure a space in which the third lead pattern 2513c electrically connecting the temperature sensor 2515 and the signal processing unit 2518, and a temperature sensor via hole H_v3 through which the temperature sensor 2515 and the third lead pattern 2513c are connected are installed.

In this case, as shown, the temperature sensor 2515 as an SMD type thermistor may have first and second electrodes formed at both ends, respectively, based on the longitudinal direction, and the first layer 251a may be provided with a pair of pads soldered to these first and second electrodes.

As illustrated, in the present embodiment, the direction in which the first electrode and the second electrode provided at both ends of the temperature sensor 2515 are arranged to be spaced apart from each other may be arranged in a direction parallel to the direction of progress of the working coil pattern 2512 arranged adjacent to the temperature sensor 2515 or in a direction intersecting the direction of progress of the working coil pattern 2512.

That is, in the case where the temperature sensor 2515 is disposed in the region of the first gap D1 as shown in FIG. 11(a), the individual pattern strands 2512a-1, 2512b-1 of the working coil patterns 2512 arranged adjacent to both sides of the temperature sensor 2515 progress along the front and rear directions. Accordingly, the direction in which the first electrode and the second electrode of the temperature sensor 2515 disposed in the region of the first gap D1 are arranged to be spaced apart from each other can be the front and rear directions or the left and right directions intersecting the front and rear directions.

Additionally, in the case where the temperature sensor 2515 is disposed in the region of the second gap D2 as shown in FIG. 11(b), the individual pattern strands 2512a-1, 2512b-1 of the working coil patterns 2512 arranged adjacent to both sides of the temperature sensor 2515 progress along the left and right directions. Accordingly, the direction in which the first electrode and the second electrode of the temperature sensor 2515 disposed in the region of the second gap D2 are arranged to be spaced apart from each other can be the left and right directions or the front and rear directions intersecting the left and right directions.

In this case, a pair of pads corresponding to the first electrode and the second electrode of the temperature sensor 2515 disposed in the region of the first gap D1, and the first electrode and the second electrode of the temperature sensor 2515 disposed in the second gap D2, respectively, may be arranged with the same directionality as these.

Through this, the third lead pattern 2513c for transmitting an electrical signal generated from the temperature sensor 2515 to the signal processing unit 2518 can be extended toward the signal processing unit 2518 without interference with the working coil pattern 2512 or in a state in which interference with the working coil pattern 2512 is minimized.

More specifically, the portion of the third lead pattern 2513c, which overlaps the sensing coil pattern 2514 and extends across the sensing coil pattern 2514, may be provided in any one of the third to seventh layers 251c, 251d, 251e, 251f, 251g in which the first type pattern 2512a is formed, or may be provided in any one of the eighth to twelfth layers 251h, 251i, 251j, 251k, 251l in which the second type pattern 2512b is formed.

For example, in the present embodiment, as illustrated in FIG. 14, the third lead pattern 2513c may be provided in any one of the eighth to twelfth layers 251h, 251i, 251j, 251k, 251l in which the second type pattern 2512b is formed, and the third lead pattern 2513c formed in any one of the eighth to twelfth layers 251h, 251i, 251j, 251k, 251l may extend in parallel to the pattern strand 2512b-1 of the second type pattern 2512b in the inside of the first gap D1 and the second gap D2.

Through this, the third lead pattern 2513c can be extended to effectively avoid the working coil pattern 2512.

The remaining portion of the third lead pattern 2513c may be formed, as shown in FIGS. 10 and 11, in the first layer 251a or the second layer 251b in which interference with the working coil pattern 2512 does not occur.

Hereinafter, the detailed configuration of the first type pattern 2512a and the second type pattern 2512b constituting the working coil pattern 2512 will be described with reference to FIGS. 12 to 17.

FIG. 12 illustrates the planar structure of the third layer 251c of the first coil circuit board module 251 having a multi-layer structure.

The configuration of the third layer 251c of the first coil circuit board module 251 described below can be applied equally to the fourth to seventh layers 251d, 251e, 251f, 251g unless otherwise described.

Referring to FIG. 12, the first type pattern 2512a of the working coil pattern 2512 consisting of a total of eight patterns may be arranged in the third layer 251c of the first coil circuit board module 251 so as to form a total of eight burners 2511.

As illustrated, one first type pattern 2512a may be assigned to one burner 2511, and the size of each of the first type patterns 2512a may be formed to be the same so that the size of the individual burner 2511 can be formed to be the same.

In this case, for example, eight burners 2511 may be arranged in a grid shape, and accordingly, the first type patterns 2512a may be arranged in a grid shape.

Therefore, as the first type pattern 2512a is arranged in a grid shape like this while being configured to be wound in a square spiral shape, a heating area can be evenly formed in the inside of the third layer 251c.

Meanwhile, in the case where a plurality of first type patterns 2512a are disposed in a grid shape like this, these second type patterns 2512b may be arranged to be symmetrical.

That is, a plurality of first type patterns 2512a may be arranged to become a left-right symmetrical shape with respect to the light-transmissive slit hole H_sl, which becomes the left-right direction center line of the third layer 251c.

Additionally, a plurality of first type patterns 2512a may be arranged to become a front-rear symmetrical shape with respect to the front-rear direction center line of the third layer 251c.

In this way, by arranging a plurality of first type patterns 2512a in a symmetrical form, the length of the first lead pattern 2513a for supplying high-frequency power to the individual third layer 251c can be minimized, and the structure of the first lead pattern 2513a can be simplified.

FIG. 13 illustrates the planar structure of the eighth layer 251h of the first coil circuit board module 251 having a multi-layer structure.

The configuration of the eighth layer 251h of the first coil circuit board module 251 described below can be applied equally to the ninth to twelfth layers 251i, 251j, 251k, 251l unless otherwise described.

As shown in FIG. 13, the second type pattern 2512a of the working coil pattern 2512 consisting of a total of eight patterns may be arranged in the eighth layer 251h of the first coil circuit board module 251 so as to form a total of eight burners 2511.

As illustrated, one second type pattern 2512b may be assigned to one burner 2511, and the size of each of the second type patterns 2512a may be formed to be the same so that the size of the individual burner 2511 can be formed to be the same.

In this case, similarly to the first type pattern 2512a, the second type pattern 2512b may be arranged in a grid shape.

Additionally, similarly to the first type pattern 2512a described above, a plurality of second type patterns 2512b may be arranged to become a left-right symmetrical shape with respect to the light-transmitting slit hole H_sl, and a plurality of second type patterns 2512b may be arranged to become a front-rear symmetrical shape with respect to the front-rear direction center line of the third layer 251c.

FIG. 14 illustrates the first type pattern 2512a and the second type pattern forming one identical burner 2511.

The first type pattern 2512a and the second type pattern 2512b illustrated in FIG. 14 may be arranged in a layered structure along the up and down directions as described above so as to form the same burner 2511 together.

As illustrated in FIG. 14, the first type pattern 2512a and the second type pattern 2512b constituting the working coil pattern 2512 may be wound to have a square spiral shape from the first common terminal 2512a-2, 2512b-2 formed in the inner side toward the second common terminal 2512a-3, 2512b-3 formed in the outer side, as described above.

For example, it may be wound a total of nine times from the first common terminal 2512a-2, 2512b-2 to the second common terminal 2512a-3, 2512b-3. That is, it may be wound so that the number of turns is 9 times.

As illustrated, the first common terminal 2512a-2, 2512b-2 may be formed in an eccentric position from the center of the burner 2511 to the outer side direction. That is, a region in which neither the first type pattern 2512a nor the second type pattern 2512b is formed may be formed in the center of the burner 2511. The purpose of this is to prevent overheating that may occur because heat generated by individual pattern strands 2512a-1, 2512b-1 is concentrated in the center of the burner 2511. Although not shown, a means for preventing overheating on the central side of the burner 2511 may be additionally provided in the form of a via hole in the central side of the burner 2511.

Additionally, as described above, the distance between turn and turn forming each of the first type pattern 2512a and the second type pattern 2512b may be maintained approximately constant, but the internal gap D1 for placement of the temperature sensor 2515 may be formed between the third turn and the fourth turn.

Meanwhile, for example, the first type pattern 2512a may form one turn by six pattern strands 2512a-1 being bundled, and the second type pattern 2512b may form one turn by five pattern strands 2512b-1 being bundled.

The widths of the individual pattern strands 2512a-1, 2512b-1 constituting the first type pattern 2512a and the second type pattern 2512b may be formed identically in a range of 0.27 mm to 0.33 mm, preferably 0.3 mm.

However, although the first type pattern 2512a constitutes one turn with a total of six individual pattern strands 2512a-1, it does not proceed from the first turn to the ninth turn with only six individual pattern strands 2512a-1.

Likewise, although the second type pattern 2512b constitutes one turn with a total of five individual pattern strands 2512b-1, it does not proceed from the first turn to the ninth turn with only five individual pattern strands 2512b-1.

That is, the first type pattern 2512a may be disposed by dividing a plurality of pattern strands 2512a-1 in a manner of stopping any one of the six individual pattern strands 2512a-1 and allowing a new individual pattern strand 2512a-1 to newly proceed when one turn is completed while proceeding from the first turn to the ninth turn.

Similarly, the second type pattern 2512b may be disposed by dividing a plurality of pattern strands 2512b-1 in a manner of stopping any one of the five individual pattern strands 2512b-1 and allowing a new individual pattern strand 2512b-1 to newly proceed when one turn is completed while proceeding from the first turn to the ninth turn.

By configuring the first type pattern 2512a and the second type pattern 2512b to be formed through a plurality of divided individual pattern strands 2512a-1, 2512b-1 in this way, it is possible to achieve the effect of a bundle of wires being bundled similarly to the Litz wire applied to conventional cooktops.

In this case, as illustrated in FIG. 15, the starting point and the ending point of the individual pattern strand 2512a-1 of the first type pattern 2512a arranged to form a new turn may be connected in series through the working coil via holes H_v1 with the starting point and the ending point of the individual pattern strand 2512b-1 of the second type pattern 2512b arranged to form a new turn in the same manner, respectively.

In this case, the working coil via holes H_v1 connecting the starting point and the ending point of the individual pattern strand 2512a-1 of the first type pattern 2512a to the starting point and the ending point of the individual pattern strand 2512b-1 of the second type pattern 2512b may be configured, as illustrated in FIG. 16, to connect together the individual pattern strands 2512a-1, 2512b-1 disposed in the respective layers by penetrating entirely from the third layer 251c to the twelfth layer 251l.

However, as illustrated in FIG. 15, the individual pattern strand 2512a-1 constituting the first type pattern 2512a and the individual pattern strand 2512b-1 constituting the second type pattern 2512b may be configured to extend in opposite directions.

For example, the individual pattern strand 2512a-1 constituting a first type pattern 2512a may extend along a first direction W1, and the individual pattern strand 2512b-1 constituting a second type pattern 2512b may extend along a second direction W2 opposite to the first direction W1.

As illustrated by way of example, the first direction W1 may be clockwise, and the second direction W2 may be counterclockwise.

Therefore, when high-frequency power is supplied through the same working coil via hole H_v1, currents having opposite directionality can flow in the individual pattern strand 2512a-1 of the first type pattern 2512a and the individual pattern strand 2512b-1 of the second type pattern 2512b, which are electrically connected simultaneously to the same working coil via hole H_v1, and magnetic fields having opposite directionality can be formed.

In this way, as magnetic fields of opposite directions are formed in the first type pattern 2512a and the second type pattern 2512b, respectively, it is possible to produce a magnetic field distribution effect similar to the conventional Litz wire configured in a twisted form.

Accordingly, the magnetic fields generated from the first type pattern 2512a and the second type pattern 2512b can be evenly transmitted to a container without being concentrated on a specific portion of the container, thereby improving the heating efficiency and heating effect for the container.

Additionally, in a plurality of working coil patterns 2512 constructed with the first type pattern 2512a and the second type pattern 2512b, the patterns may be arranged along the same direction, or the patterns may be each arranged along different directions. For example, the heating efficiency can be increased by configuring two adjacent working coil patterns 2512 to be arranged in different directions.

Meanwhile, as illustrated in FIG. 17, in the first common terminal 2512a-2 of the first type pattern 2512a and the first common terminal 2512b-2 of the second type pattern 2512b, a plurality of working coil via holes H_v1 may be formed to minimize loss due to resistance.

These plurality of working coil via holes H_v1 may be formed to be penetrated entirely from the first layer 251a to the twelfth layer 251l so as to be electrically connected to the first lead pattern 2513a formed in the first layer 251a.

In this way, as the common working coil via hole H_v1 is formed to be penetrated for all the layers, the emission of heat generated by individual working coil pattern 2512 can be effectively released from the first coil circuit board module 251 through the working coil via hole H_v1. That is, the working coil via hole H_v1 can function as a ventilation hole preventing overheating of the first coil circuit board module 251.

Although not shown in FIG. 17, similarly to the first common terminal 2512a-2, 2512b-2, also in the second common terminal 2512a-3 of the first type pattern 2512a and the second common terminal 2512b-3 of the second type pattern 2512b, a plurality of working coil via holes H_v1 may be formed to be penetrated entirely from the first layer 251a to the twelfth layer 251l.

### [Detailed structure and placement structure of temperature sensor]

Hereinafter, with reference to FIGS. 18 to 25, the detailed structure of the temperature sensor 2515 and the structure in which the temperature sensor 2515 is disposed in the coil circuit board module 251, 252, 253 will be described.

First, as described above, FIG. 18 illustrates a configuration in which an SMD type temperature sensor 2515 is mounted on the upper surface of the coil circuit board module 251, 252, 253 while being surrounded by the sensing coil pattern 2514.

Referring to FIG. 18, the SMD type temperature sensor 2515 may be mounted in the coil circuit board module 251, 252, 253, and, more particularly, may be disposed on the upper surface of the coil circuit board module 251, 252, 253, which is a position confronting the top plate 21.

In this case, as described above, the SMD type temperature sensor 2515 can be easily integrated into the coil circuit board module 251, 252, 253 through mounting on the coil circuit board module 251, 252, 253.

The SMD type temperature sensor 2515 may be constructed by including a sensing chip 2515a generating an output signal related to a sensed temperature, a sensor body 2515b accommodating the sensing chip 2515a therein, and a first electrode 2515c and a second electrode 2515d spaced apart from each other with the sensor body 2515b interposed therebetween and electrically connected to the sensing chip 2515a, respectively.

For example, the sensing chip 2515a may be disposed in the inside of the sensor body 2515b having a square pillar shape, and the first electrode 2515c and the second electrode 2515d may be disposed at both ends of the sensor body 2515b, respectively, based on the longitudinal direction of the temperature sensor 2515.

In this case, the first electrode 2515c and the second electrode 2515d may be provided in the form of a disk or a cylinder formed protrudingly from the longitudinal both ends of the sensor body 2515b along a direction away from the sensor body 2515b. The first electrode 2515c and the second electrode 2515d may be directly soldered to be connected to the sensor pads P_s, respectively, formed on the upper surface 251t of the first coil circuit board module 251. Here, the upper surface 251t of the first coil circuit board module 251 may be defined as one side surface of the first coil circuit board module 251 arranged to face the upper side direction, i.e., the top plate 21, and the lower surface of the first coil circuit board module 251 may be defined as the other side surface of the first coil circuit board module 251 arranged to face the lower side direction.

The third lead pattern 2513c described above may be connected to the sensor pad P_s, and the output signals of the first electrode 2515c and the second electrode 2515d may be transmitted to the signal processing unit 2518 through the sensor pad P_s and the third lead pattern 2513c.

For example, as the SMD type temperature sensor 2515, an SMD type thermistor may be selected which has a longitudinal direction width of approximately 3.2 mm from the end surface of the first electrode 2515c to the end surface of the second electrode 2515d and a transverse direction width and up-down direction width of approximately 1.65 mm.

In particular, the sensor body 2515b of the temperature sensor 2515 acting as a temperature sensing surface may have a size such that the longitudinal direction width Ws_l is approximately 2.3 mm and the transverse direction width Ws_t is approximately 1.65 mm.

Meanwhile, as illustrated in FIG. 18, in the case where the SMD type temperature sensor 2515 is mounted on the upper surface 251t of the first coil circuit board module 251, a part of the outer surface of the sensor body 2515b acting as the temperature sensing surface, i.e., the bottom surface based on the illustrated state, may be disposed to be in direct contact with the upper surface of the first coil circuit board module 251.

In this case, as described above, the thermal insulating material 291 may be disposed between the first coil circuit board module 251 and the top plate 21.

As shown, in order to easily sense the temperature of the top plate 21, an opening may be formed in the thermal insulating material 291 to prevent interference with the SMD type temperature sensor 2515.

Additionally, the top surface of the sensor body 2515b of the SMD type temperature sensor 2515 may directly contact the bottom surface 21b of the top plate 21 to sense the temperature of the top plate 21, or may indirectly sense the temperature of the lower surface 21b of the top plate 21 through an electrical insulating material 292 as shown.

As described above, the SMD type temperature sensor 2515 is configured to be disposed in the internal gap D1 and the external gap D2 of the working coil pattern 2512, Therefore, the temperature sensor 2515 is disposed in a position very close to the pattern strand 2512a-1, 2512b-1 constituting the working coil pattern 2512 based on the horizontal direction.

In this case, when high-frequency power is applied to the working coil pattern 2512 to heat the container, each of the pattern strands 2512a-1, 2512b-1 can act as a resistor, generating a significant level of emission of heat, and the emission of heat generated in the pattern strand 2512a-1, 2512b-1 can be transferred to the sensor body 2515b of the SMD type temperature sensor 2515 through conduction.

Due to the placement structure of the SMD type temperature sensor 2515, a problem may arise in which the SMD type temperature sensor 2515 follows the temperature of the first coil circuit board module 251 rather than the temperature of the top plate 21.

This will be explained based on the experimental results shown in FIG. 19.

The experimental results are shown in which the temperature was measured based on a configuration in which the outer surface of the sensor body 2515b of the SMD type temperature sensor 2515 is disposed to be in direct contact with the upper surface 251t of the first coil circuit board module 251.

The experimental conditions are as follows.

First, a power of 1700 W was supplied to the working coil pattern 2512 of the first coil circuit board module 251 for a first period of time (about 180 seconds), and then a power of 3400 W was supplied for a second period of time (about 200 seconds).

Afterwards, the power supply was cut off for a third period of time (approximately 100 seconds) and the container seated on the top plate 21 was replaced with another container, and after the replacement of the container, a power of 3400 W and a power of 1700 W were supplied for a fourth period of time (approximately 180 seconds) and a fifth period of time (approximately 200 seconds), respectively.

In order to make determination as to the temperature change pattern sensed by the SMD type temperature sensor 2515, the temperature of the top plate 21 and the temperature of the first coil circuit board module 251 were measured through a separate sensor for an experiment.

As illustrated in FIG. 19, it was confirmed that the change pattern of the temperature sensed by the SMD type temperature sensor 2515 clearly follows the temperature change of the first coil circuit board module 251 for throughout the temperature rising section and the temperature falling section.

In other words, it was confirmed that the SMD type temperature sensor 2515 is more affected by the temperature of the first coil circuit board module 251 together than by the temperature of the top plate 21, which is the main measurement target, and this may be determined to be a phenomenon that occurs because the sensor body 2515b of the SMD type temperature sensor 2515 is disposed to directly contact the upper surface 251t of the first coil circuit board module 251.

An object of the present invention is to provide a means capable of minimizing or preventing a phenomenon in which the temperature sensing characteristic of the SMD type temperature sensor 2515 follows the temperature of the first coil circuit board module 251 rather than the temperature of the top plate 21 as the SMD type temperature sensor 2515 is mounted on the upper surface 251t of the first coil circuit board module 251.

To this end, the cooktop 20 of the cooking appliance 1 according to another embodiment of the present invention may be configured to be provided with a metal mold type temperature sensor 2515-1 rather than the SMD type described above.

As known in the art, the metal mold type temperature sensor 2515-1 refers to a sensor in which, unlike the SMD type, a sensor body 2515b-1 constituting the outer body is made with a metal mold.

In this way, by configuring the sensor body 2515b-1 through a metal mold having a higher heat transfer rate than the SMD type, more improved heat sensing performance can be secured.

For example, the metal mold may be a lightweight metal with high thermal conductivity, such as aluminum, copper or the like.

However, as known, the metal mold type temperature sensor 2515-1 has a much larger size than the SMD type.

That is, as shown in FIG. 20, the metal mold type temperature sensor 2515-1 has a larger horizontal direction width than the internal gap D1 of the working coil pattern 2512.

Additionally, although not shown, the horizontal direction width of the metal mold type temperature sensor 2515-1 has a larger horizontal direction width than the external gap D2 of the working coil pattern 2512.

Therefore, due to the risk of interference with the working coil pattern, the metal mold type temperature sensor 2515-1 cannot be disposed in the internal gap D1 and external gap D2 of the working coil pattern 2512 where the SMD type temperature sensor could be disposed. 2512.

Accordingly, as illustrated in FIG. 20, the location of the metal mold type temperature sensor 2515-1 constituting the cooktop 20 of the cooking appliance 1 according to another embodiment of the present invention may be set so that it is disposed in the central inner region 2511a formed in the inside of the working coil pattern 2512 forming the individual burner 2511. However, this is merely illustrative, and the configuration may be made such that the location of the metal mold type temperature sensor 2515-1 is set so as for it to be disposed in the first central inner region described above, and in the inter-turn region formed between the turns of the working coil patterns 2512 disposed adjacent to each other. The present invention is not limited to this, but will be described below based on a configuration in which the metal mold type temperature sensor 2515-1 is disposed in the central inner region 2511a formed in the inside of the working coil pattern 2512.

Here, the central inner region 2511a of the working coil pattern 2512 may be defined as a region surrounded by the pattern strand 2512a-1, 2512b-1 among the several pattern strands 2512a-1, 2512b-1 constituting the first turn of the working coil pattern 2512, which is disposed in the innermost side. To distinguish it from the first central inner region 2514c of the sensing coil pattern 2514 described above, the central inner region of the working coil pattern 2512 is hereinafter referred to as the second central inner region 2511a.

For example, as in the embodiment, in the case where the working coil pattern 2512 is wound in a square spiral shape, the second central inner region 2511a of the working coil pattern 2512 may have a square shape. Alternatively, although not shown, the second central inner region 2511a of the working coil pattern 2512 may also be configured to have a circular shape or a polygonal shape such as a pentagonal shape, a hexagonal shape, or the like.

As described above, as high-frequency power is applied, a significant level of emission of heat occurs inevitably in the working coil pattern 2512. In particular, in the case where the working coil pattern 2512 is wound in a square spiral shape, the highest emission of heat occurs in the inner region, which is the starting point of the working coil pattern 2512, where emissions of heat generated from multiple pattern strands are superposed on one another.

Therefore, in order to prevent overheating of the first coil circuit board module 251 caused by this superposition of emissions of heat, the first coil circuit board module 251 according to the present invention may be configured to have the second central inner region 2511a in which the working coil pattern 2512 is not formed, and may be configured to utilize the second central inner region 2511a as an region in which the metal mold type temperature sensor 2515-1 is disposed.

Therefore, the metal mold type temperature sensor 2515-1 can be disposed in the first coil circuit board module 251 in a state where it is surrounded by the working coil pattern 2512 when viewed from the top plate 21, and, through this, the metal mold type temperature sensor 2515-1 can be effectively disposed at a position that does not overlap the working coil pattern 2512 and the sensing coil pattern 2514.

Meanwhile, although, in FIG. 20, the metal mold type temperature sensor 2515-1 is shown to be disposed at a position where the center point of the metal mold type temperature sensor 2515-1 and the center point of the second central inner region 2511a of the working coil pattern 2512 approximately coincide, this is merely illustrative, and the influence of emission of heat from the working coil pattern 2512 can be minimized simply by disposing the metal mold type temperature sensor 2515-1 at any position in the second central inner region 2511a of the working coil pattern 2512.

Meanwhile, the metal mold type temperature sensor 2515-1 may be disposed in this way to belong to the second central inner region 2511a of the working coil pattern 2512, and, more particularly, the configuration may be made such that it is disposed in the first coil circuit board module 251 in a state where it is separated from the first coil circuit board module 251.

As described above, in order for the metal mold type temperature sensor 2515-1 to be disposed in the first coil circuit board module 251 in a state where it is separated from the first coil circuit board module 251, an insertion hole H_th may be formed in the second central inner region 2511a of the sensing coil pattern 2514.

The insertion hole H_th may be formed to penetrate the first coil circuit board module 251 from the upper surface 251t to the lower surface of the first coil circuit board module 251, and the metal mold type temperature sensor 2515-1 may be disposed in a state where it is at least partially inserted into the insertion hole H_th and is separated from the first coil circuit board module 251.

FIG. 22 illustrates an embodiment in which the insertion hole H_th having a circular cross-section is formed to penetrate the first coil circuit board module 251 so that the metal mold type temperature sensor 2515-1 having a circular cross-section can be at least partially inserted.

The present invention will be described below based on, but is not limited to, an insertion hole H_th having a circular cross-section as shown.

As shown, in the case where the insertion hole H_th having a circular cross-section is formed in the second central inner region 2511a of the working coil pattern 2512, the cross-sectional area of the insertion hole H_th may be formed to be smaller than the area of the central inner region.

That is, the diameter of the insertion hole H_th may be formed to be smaller than the width in the left and right directions and the width in the front and rear directions of the second central inner region 2511a of the working coil pattern 2512.

Through this, it is possible to secure the horizontal direction margin distance for the working coil pattern 2512, and to effectively prevent interference with or damage to the working coil pattern 2512 during the formation of the insertion hole H_th.

Additionally, the cross-sectional area of the insertion hole H_th can be formed to be larger than the maximum horizontal direction cross-sectional area of the metal mold type temperature sensor 2515-1.

As described below, the maximum horizontal direction cross-sectional area of the metal mold type temperature sensor 2515-1 may be formed in a protruding surface portion 2515b-13 of the sensor body 2515b-1.

Accordingly, since the cross-sectional area of the insertion hole H_th is set to be larger than the maximum horizontal direction cross-sectional area of the metal mold type temperature sensor 2515-1, the metal mold type temperature sensor 2515-1 can be inserted into the insertion hole H_th without interference or contact with the first coil circuit board module 251.

Meanwhile, the metal mold type temperature sensor 2515-1 may be configured to be indirectly supported through a sensor holder 2519 in the insertion hole H_th of the first coil circuit board module 251 in a state where it is separated from the first coil circuit board module 251.

As described below, in a manner in which the radial outer end of the sensor holder 2519 is coupled to the edge of the insertion hole H_th and the sensor body 2515b-1 of the metal mold type temperature sensor 2515-1 is coupled to the radial inner end of the sensor holder 2519, the metal mold type temperature sensor 2515-1 can be separated from the insertion hole H_th and the first coil circuit board module 251, and it is possible to minimize the conduction of the emission of heat generated in the working coil pattern 2512 to the metal mold type temperature sensor 2515-1, enabling the metal mold type temperature sensor 2515-1 to follow the temperature of the top plate 21.

Hereinafter, with reference to FIGS. 22 to 25, an illustrative detailed configuration of the metal mold type temperature sensor 2515-1 and the sensor holder 2519 according to the present invention will be described.

First, referring to FIGS. 22 to 24, the metal mold type temperature sensor 2515 may be constructed by including a sensing chip 2515a-1 generating an output signal related to a sensed temperature, a sensor body 2515b-1 accommodating the sensing chip 2515a-1 therein, and a pair of lead cables 2515c-1 electrically connected to the sensing chip 2515a-1, spaced apart from each other with the sensor body 2515b interposed therebetween and electrically connected to the sensing chip 2515a, respectively.

FIGS. 22 to 24 illustrate the metal mold type temperature sensor 2515-1 having a configuration in which the sensing chip 2515a-1 is disposed in the inside of the sensor body 2515b-1 having a generally cylindrical shape to be close to an upper surface 2515b-11 becoming a temperature sensing surface.

One ends of a pair of lead cables 2515c-1 may be extended into the interior of the sensor body 2515b-1 to penetrate the lower surface 2515b-12 of the sensor body 2515b-1, and may be electrically connected to the sensing chip 2515a-1. The other ends of a pair of lead cables 2515c-1 may be extended to penetrate the ferrite core module 27 as shown, and be electrically connected to the main circuit board module 281 described above.

That is, unlike the SMD type described above, the metal mold type temperature sensor 2515-1 may be configured to be electrically connected directly to the main circuit board module 281 via a pair of lead cables 2515c-1 so that the output signal can be transmitted to the main circuit board module 281.

Meanwhile, as described above, the metal mold type temperature sensor 2515-1 serves to detect the temperature of the top plate 21. In order to easily sense the temperature of the top plate 21, the upper surface 2515b-11 of the sensor body 2515b-1, which becomes a temperature sensing surface, may be configured to directly contact the lower surface 21b of the top plate 21 to sense the temperature of the top plate 21, or may be configured to indirectly sense the temperature of the lower surface 21b of the top plate 21 through the electrical insulating material 292 as shown.

To this end, the location of the upper surface 2515b-11 of the sensor body 2515b-1 may be set such that it is disposed in a position higher than the upper surface 251t of the first coil circuit board module 251 based on the up and down directions, that is, such that it protrudes upward from the upper surface 251t of the first coil circuit board module 251 toward the top plate 21.

Additionally, as shown, in order to easily sense the temperature of the top plate 21, an opening may be formed in the thermal insulating material 291 to prevent interference with the metal mold type temperature sensor 2515-1.

Meanwhile, as shown, the lower surface 2515b-12 of the sensor body 2515b-1 may be disposed in a position lower than the upper surface 251t of the first coil circuit board module 251 based on the up and down directions. That is, the lower surface 2515b-12 of the sensor body 2515b-1 may be disposed in a position higher or lower than the lower surface of the first coil circuit board module 251.

Through this, as described later, the length of the lower portion of the sensor body 2515b-1 acting as a portion to be coupled to the sensor holder 2519 can be sufficiently secured, and the coupling area for the sensor holder 2519 can be sufficiently secured.

Meanwhile, the sensor body 2515b-1 may include the protruding surface portion 2515b-13 formed in a position between the upper surface 2515b-11 and the lower surface 2515b-12 and closer to the upper surface 2515b-11.

As shown, the protruding surface portion 2515b-13 may be provided in a cylindrical shape protruding radially outward to have a larger outer diameter than the upper portion and the lower portion of the sensor body 2515b-1.

As described above, since the protruding surface portion 2515b-13 is formed to have the outer diameter larger than the outer diameter of the lower portion of the sensor body 2515b-1, the sensor body 2515b-1 can function as a stopper to prevent the sensor body 2515b-1 from being moved downward or being removed out of the sensor holder 2519 after the lower portion of the sensor body 2515b-1 has been coupled to a sensor coupling portion 2519a of the sensor holder 2519 as described later.

Meanwhile, the cooktop 20 of the cooking appliance 1 according to another embodiment of the present invention may further include the sensor holder 2519 supporting the metal mold type temperature sensor 2515-1 in a state of being separated from the first coil circuit board module 251.

In more detail, the sensor holder 2519 may be constructed by including the sensor coupling portion 2519a into which the metal mold type temperature sensor 2515-1 is at least partially inserted and coupled, a substrate coupling portion 2519b coupled to the insertion hole H_th of the first coil circuit board module 251, and a bridge portion 2519c disposed between the sensor coupling portion 2519a and the substrate coupling portion 2519b and connecting the sensor coupling portion 2519a with the substrate coupling portion 2519b.

The sensor coupling part 2519a receives the insertion of the lower portion of the above-described sensor body 2515b-1 in the upper direction, and is resiliently and detachably coupled to the lower portion of the sensor body 2515b-1 in a state of being inserted, thereby preventing the sensor body 2515b-1 from being removed out of there.

As described above, in response to the shape of the lower portion of the sensor body 2515b-1 having a cylindrical shape, the sensor coupling portion 2519a may be formed to have a hollow cylindrical shape.

In this case, in order to be resiliently coupled to the outer surface of the lower portion of the sensor body 2515b-1 after the insertion of the lower portion of the sensor body 2515b-1, the inner diameter of the sensor coupling portion 2519a may be formed to be somewhat smaller than the inner diameter of the lower portion of the sensor body 2515b-1.

Therefore, when the lower portion of the sensor body 2515b-1 is inserted, the sensor coupling portion 2519a can be elastically deformed and resiliently coupled to the outer surface of the lower portion of the sensor body 2515b-1.

In order to facilitate such resilient coupling, the sensor coupling portion 2519a may be formed of an elastic material, and preferably, a material capable of a certain elastic deformation, such as natural rubber, synthetic rubber or the like, may be selected.

Meanwhile, the substrate coupling portion 2519b is resiliently and detachably coupled to the edge of the insertion hole H_th of the first coil circuit board module 251 to serve to prevent the sensor holder 2519 from being removed from the first coil circuit board module 251.

As described above, in response to the shape of the insertion hole H_th having a circular cross-section, the substrate coupling portion 2519b may be formed to have a ring shape with a predetermined radial width.

In this case, in order to be resiliently coupled to the edge of the insertion hole H_th, a ring-shaped engaging groove 2519b-1 may be formed in the sensor coupling portion 2519a to be concavely recessed toward the inside in the radial direction.

The up direction width of the engaging groove 2519b-1 may be formed to be somewhat smaller than the thickness of the first coil circuit board module 251 in the up and down directions.

Therefore, when the edge of the insertion hole H_th is inserted into the inside of the engaging groove 2519b-1, the substrate coupling portion 2519b can be elastically deformed and resiliently coupled to the edge of the insertion hole H_th.

Meanwhile, in order not to be removed from the insertion hole H_th after having been resiliently coupled to the insertion hole H_th, the outer diameter of the engaging groove 2519b-1 may be set to be larger than the diameter of the insertion hole H_th, and the inner diameter of the engaging groove 2519b-1 may be set to be smaller than or equal to the diameter of the insertion hole H_th.

Through this, as shown in FIGS. 23 and 24, it is possible to effectively prevent the substrate coupling portion 2519b from being removed out of a state of being coupled to the insertion hole H_th in the up and down directions and in the horizontal direction.

In order to facilitate such resilient coupling, similarly to the above-described sensor coupling portion 2519a, the substrate coupling portion 2519b may be formed of an elastic material, and preferably, a material capable of a certain elastic deformation, such as natural rubber, synthetic rubber or the like, may be selected.

Meanwhile, the bridge portion 2519c serves to connect the sensor coupling portion 2519a with the substrate coupling portion 2519b.

As shown, for example, the bridge portion 2519c may be formed in a plate-like ring shape in which the radial inner end is integrally connected to the outer circumferential surface of the sensor coupling portion 2519a and the radial outer end is integrally connected to the inner circumferential surface of the substrate coupling portion 2519b.

Therefore, the radial width of the bridge portion 2519c can correspond to the distance between the sensor coupling portion 2519a and the substrate coupling portion 2519b.

Meanwhile, the bridge portion 2519c may be configured such that the upper surface 2515b-11 of the sensor body 2515b-1 serves to exert a pushing and pressing force toward the top plate 21 in a state in which the metal mold type temperature sensor 2515-1 is coupled to the sensor coupling portion 2519a and the substrate coupling portion 2519b is coupled to the edge of the insertion hole H_th.

To this end, as shown in FIGS. 23 and 24, the bridge portion 2519c may be formed in a cone shape having an upward slope as it progresses from the radial outer end toward the radial inner end.

That is, in this way, since the bridge portion 2519c is configured in a cone shape, when the metal mold type temperature sensor 2515-1 is disposed under the top plate 21, the bridge portion 2519c can perform a function similar to a kind of disc spring that generates a restoring force or a force acting to press the upper surface of the sensor body 2515b-1 toward the top plate 21.

Accordingly, the surface contact state between the upper surface 2515b-11 becoming the sensing surface of the sensor body 2515b-1 and the lower surface of the top plate 21 or the surface contact state between the upper surface 2515b-11 becoming the sensing surface of the sensor body 2515b-1 and the electrical insulating material 292 can be always maintained, so that the accuracy of temperature detection can be further improved.

In order to facilitate the exertion of the restoring force or the force through the elastic deformation as described above, similarly to the above-described sensor coupling portion 2519a and the substrate coupling portion, the substrate coupling portion 2519b may be formed of an elastic material, and preferably, a material capable of a certain elastic deformation, such as natural rubber, synthetic rubber or the like, may be selected.

Meanwhile, as illustrated in FIG. 24, the bridge portion 2519c of the sensor holder 2519 may be provided with at least one ventilation hole 2519h formed to be penetrated along the up and down directions.

As described above, when considering based on the individual burner 2511, the highest temperature distribution is observed in the second central inner region 2511a of the working coil pattern 2512 due to the superposition effect of the emission of heat generated from the individual pattern strand 2512a-1, 2512b-1.

Additionally, although the insertion hole H_th is formed in the second central inner region 2511a of the working coil pattern 2512 to be penetrated along the up and down directions, the insertion hole H_th is entirely shielded by the sensor holder 2519.

Therefore, as illustrated in FIG. 24, by forming the ventilation hole 2519h in the bridge portion 2519c to be penetrated along the up and down directions, the upper space and the lower space of the second central inner region 2511a can be communicated.

Accordingly, the ventilation hole 2519h can function as an air passage through which the high temperature air formed in the upper space of the second central inner region 2511a showing the highest temperature distribution based on the first coil circuit board module 251 can be discharged to the lower region, and the relatively low temperature air existing in the lower region flows into the upper region.

Through this, overheating of the first coil circuit board module 251 can be effectively prevented, and the following effect can be achieved: the phenomenon in which the metal mold type temperature sensor 2515-1 follows the temperature of the first coil circuit board module 251 due to the heat generation of the working coil pattern 2512 can be additionally improved.

In order to function as an air inlet and an outlet hole, at least one pair of the ventilation holes 2519h may be provided, and as illustrated, these pair of ventilation holes 2519h may be formed at positions radially spaced apart from each other with the sensor coupling part 2519a interposed therebetween or at positions symmetrical with respect to the sensor coupling portion 2519a.

Meanwhile, since at least one pair of ventilation holes 2519h are provided in the bridge portion 2519c in this way, there is a possibility that the rigidity and restoring force of the bridge portion 2519c may be reduced.

In order to prevent such a decrease in rigidity and restoring force, it is preferable to limit the size of the radial width of the ventilation hole 2519h so that it is formed smaller than the radial width of the bridge portion 2519c as shown.

Meanwhile, in FIGS. 24 and 25, the metal mold type temperature sensor 2515-1 is configured to be indirectly connected to and supported in the insertion hole H_th of the first coil circuit board module 251 through the bridge portion 2519c and the substrate coupling portion 2519b of the sensor holder 2519, but unlike this, the metal mold type temperature sensor 2515-1 may be configured to be connected to and supported in the insertion hole H_th of the first coil circuit board module 251 by only the sensor coupling portion 2519a.

That is, in the case of an embodiment in which the metal mold type temperature sensor 2515-1 is disposed in a position where the diameter of the insertion hole H_th is formed relatively narrow, or in which the size of the second central inner region 2511a is formed narrow, the bridge portion 2519c and the substrate coupling portion 2519b are inevitably omitted, thereby reducing the horizontal direction size of the sensor holder 2519. In this case, by configuring such that the metal mold type temperature sensor 2515-1 is connected and supported only by the sensor coupling portion 2519a, the horizontal direction size of the sensor holder 2519 can be minimized. Therefore, the outer circumferential surface of the sensor coupling portion 2519a of the sensor holder 2519 can be directly connected and resiliently coupled to the edge of the insertion hole H_th.

Although the present invention has been described with reference to the drawings as examples, it is obvious that the present invention is not limited to the embodiments and drawings disclosed in this specification, and that various modifications can be made by those skilled in the art without departing from the scope of the technical idea of the present invention. Additionally, even if the effects according to the configuration of the present invention were not explicitly written while describing the embodiments of the present invention, it is natural that the effects that can be predicted by the configuration should also be recognized.

## Claims

1. A cooking appliance comprising:
a top plate for a container to be seated on;
a heating part generating a magnetic field to cause the container to emit heat; and
a temperature sensor sensing a temperature of the top plate,
wherein the heating part includes a coil circuit board module having a working coil pattern formed to be wound spirally so as to generate the magnetic field and a sensing coil pattern formed to be wound spirally so as to sense whether the container is seated, and
wherein the temperature sensor is disposed in the coil circuit board module so as to belong to an area where neither the working coil pattern nor the sensing coil pattern is formed.

2. The cooking appliance of claim 1, wherein the temperature sensor is disposed so as not to overlap the sensing coil pattern and the working coil pattern.

3. The cooking appliance of claim 1, wherein the coil circuit board module is provided with an upper surface arranged to face upward and a lower surface arranged to face downward,
wherein the coil circuit board module is provided with an insertion hole formed to be penetrated from the upper surface to the lower surface, and
wherein the temperature sensor is at least partially inserted into the insertion hole, and is disposed in the insertion hole in a state of being separated from the coil circuit board module.

4. The cooking appliance of claim 3, wherein the working coil pattern or the sensing coil pattern has a central inner region formed in an inner side thereof, in which no pattern is formed,
wherein the insertion hole is disposed in the central inner region, and
wherein a cross-sectional area of the insertion hole is formed to be smaller than an area of the central inner region.

5. The cooking appliance of claim 4, wherein the insertion hole has a circular cross-section.

6. The cooking appliance of claim 3, wherein a cross-sectional area of the insertion hole is formed to be larger than a maximum cross-sectional area of the temperature sensor in a horizontal direction.

7. The cooking appliance of claim 3, wherein an upper surface of the temperature sensor is disposed in a position higher than the upper surface of the coil circuit board module.

8. The cooking appliance of claim 7, wherein a lower surface of the temperature sensor is disposed in a position lower than the upper surface of the coil circuit board module based on up and down directions.

9. The cooking appliance of claim 3, further comprising:
a sensor holder supporting the temperature sensor in a state of separating the temperature sensor from the coil circuit board module.

10. The cooking appliance of claim 9, wherein the sensor holder includes:
a sensor coupling portion into which the temperature sensor is at least partially inserted and coupled;
a substrate coupling portion coupled to the insertion hole; and
a bridge portion disposed between the sensor coupling portion and the substrate coupling portion and connecting the sensor coupling portion with the substrate coupling portion.

11. The cooking appliance of claim 10, wherein when the coil circuit board module is disposed under the top plate in a state where the temperature sensor is inserted into the insertion hole through the sensor holder, the bridge portion applies to the temperature sensor a force acting so as to press an upper surface of the temperature sensor toward the top plate.

12. The cooking appliance of claim 10, wherein the sensor coupling portion is resiliently coupled to a lower portion of the temperature sensor.

13. The cooking appliance of claim 10, wherein the substrate coupling portion is resiliently coupled to an edge of the insertion hole.

14. The cooking appliance of claim 10, wherein the bridge portion is provided with a ventilation hole formed to be penetrated along up and down directions.

15. The cooking appliance of claim 9, wherein the sensor holder includes a sensor coupling portion into which the temperature sensor is at least partially inserted and coupled.

16. The cooking appliance of claim 15, wherein the sensor coupling portion is resiliently coupled to an edge of the insertion hole.
